(19) Europäisches Patentamt
European Patent Office
Office européen des brevets

(11) **EP 3 078 722 B1**

(12) **EUROPEAN PATENT SPECIFICATION**

(45) Date of publication and mention
of the grant of the patent:
**21.11.2018   Bulletin 2018/47**

(51) Int Cl.:
***C09K 11/64*** *(2006.01)*      ***C09D 5/22*** *(2006.01)*
***C09K 11/08*** *(2006.01)*

(21) Application number: **14868696.7**

(22) Date of filing: **05.12.2014**

(86) International application number:
**PCT/JP2014/082206**

(87) International publication number:
**WO 2015/083814 (11.06.2015 Gazette 2015/23)**

(54) **STRESS-INDUCED LIGHT-EMISSION MATERIAL, METHOD FOR MANUFACTURING STRESS-INDUCED LIGHT-EMISSION MATERIAL, STRESS-INDUCED LIGHT-EMISSION PAINT COMPOSITION, RESIN COMPOSITION, AND STRESS-INDUCED LIGHT-EMISSION BODY**

MATERIAL ZUR SPANNUNGSINDUZIERTEN LICHTEMISSION, VERFAHREN ZUR HERSTELLUNG EINES MATERIALS ZUR SPANNUNGSINDUZIERTEN LICHTEMISSION, FARBZUSAMMENSETZUNG ZUR SPANNUNGSINDUZIERTEN LICHTEMISSION, HARZZUSAMMENSETZUNG UND KÖRPER ZUR SPANNUNGSINDUZIERTEN LICHTEMISSION

MATÉRIAU À EFFET ÉLECTROLUMINESCENT INDUIT PAR LE STRESS, SON PROCÉDÉ DE PRODUCTION, COMPOSITION DE PEINTURE À EFFET ÉLECTROLUMINESCENT INDUIT PAR LE STRESS, COMPOSITION DE RÉSINE, ET CORPS À EFFET ÉLECTROLUMINESCENT INDUIT PAR LE STRESS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2013   JP 2013253387**

(43) Date of publication of application:
**12.10.2016   Bulletin 2016/41**

(73) Proprietor: **Sakai Chemical Industry Co., Ltd.**
**Sakai-shi, Osaka 590-8502 (JP)**

(72) Inventors:
• **KAWATAKI, Takahiro**
**Sakai-shi**
**Osaka 590-0985 (JP)**
• **MORI, Kenji**
**Sakai-shi**
**Osaka 590-0985 (JP)**

• **KOBAYASHI, Keita**
**Sakai-shi**
**Osaka 590-0985 (JP)**
• **NAKAO, Hiroshi**
**Sakai-shi**
**Osaka 590-0985 (JP)**
• **TOJO, Tomonori**
**Sakai-shi**
**Osaka 590-0985 (JP)**

(74) Representative: **Hart-Davis, Jason et al**
**Cabinet Beau de Loménie**
**158, rue de l'Université**
**75340 Paris Cedex 07 (FR)**

(56) References cited:
DE-A1-102007 058 339      JP-A- H11 140 438
JP-A- 2005 320 425      JP-A- 2006 269 938
JP-A- 2009 142 771      JP-A- 2011 094 041
JP-B2- 3 789 193      US-A1- 2005 266 269
US-A1- 2007 057 232      US-B1- 6 264 855

## Description

### TECHNICAL FIELD

The present invention relates to a mechanoluminescent material, a method for producing the mechanoluminescent material, a mechanoluminescent coating composition, a resin composition, and a mechanoluminescent article.

### BACKGROUND ART

Mechanoluminescent materials are known as materials that emit visible light at around room temperature in response to external stimuli. In particular, materials that emit light in response to mechanical stimuli such as force applied from the outside (e.g., compression, displacement, friction, impact) are called mechanoluminescent materials.
For example, Patent Literatures 1 and 2 report mechanoluminescent materials based on aluminate.
Such mechanoluminescent materials have poor water resistance, so that contact with water unfortunately causes a decrease in the mechanoluminescence intensity. Thus, a water repellent treatment, such as coating with a fatty acid, is generally applied; however, its effect of suppressing a decrease in the mechanoluminescence intensity is insufficient.
Patent Literature 3 discloses a method for improving the water resistance of a light-storing phosphor having a composition similar to that of a mechanoluminescent material by a heat treatment after dry-mixing the light-storing phosphor with phosphate.

### CITATION LIST

- Patent Literature

    Patent Literature 1: JP 3511083 B
    Patent Literature 2: JP 5007971 B
    Patent Literature 3: JP 3789193 E

US2005/266269A1 is also related to mechanoluminescent materials comprising europium-activated strontium aluminate particles surface-treated with a phosphate.

### SUMMARY OF INVENTION

- Technical Problem

According to Patent Literature 3, the surface of the light-storing phosphor is reacted with phosphate to make the surface insoluble or poorly-soluble in water. However, when the present inventors carried out a reaction of the surface of aluminate with phosphate based on the disclosed method to evaluate the water resistance, the surface was found to be neither insoluble nor poorly-soluble. In addition, the distribution of the surface layer obtained by the reaction of the phosphate was non-uniform.
In view of the above problems, the present invention aims to provide a mechanoluminescent material having sufficient water resistance. The present invention also aims to provide a method for producing the mechanoluminescent material having sufficient water resistance, a mechanoluminescent coating composition containing the mechanoluminescent material, a resin composition containing the mechanoluminescent material, and a mechanoluminescent article formed from the mechanoluminescent material.

- Solution to Problem

The present inventors found that it is possible to obtain a mechanoluminescent material having sufficient water resistance by more uniformly and more densely forming a surface-treated layer that is obtained by a reaction of the surface of aluminate with a phosphate compound. Thus, the present invention was achieved.
Specifically, the mechanoluminescent material of the present invention is a mechanoluminescent material obtained by mixing a phosphate compound and europium-activated strontium aluminate particles into slurry; grinding the slurry into ground slurry; and drying the ground slurry, wherein the rate of change calculated from a formula $(A-B)/A \times 100$ is 10% or less, where A is the strontium content in the obtained mechanoluminescent material, and B is the strontium content in the mechanoluminescent material after 168 hours of storage in an atmosphere at a temperature of 85°C and a relative humidity of 85%.

The term "grinding" as used herein includes an action to grind primary particles into smaller particles, and an action to break up aggregations of secondary, tertiary, or higher-order particles.

The mechanoluminescent material of the present invention is obtained through grinding slurry containing a phosphate compound and europium-activated strontium aluminate (hereinafter, the europium-activated strontium aluminate is also referred to as "SAO") particles. The SAO particles are ground and the surface is modified with the phosphate compound at the same time through the grinding of the slurry, resulting in a mechanoluminescent material in which a surface-treated layer obtained by the reaction of the surface of the ground SAO particles with the phosphate compound is uniform and dense. The particle size of the ground SAO particles is sufficiently small, so that these particles are unlikely to be crushed in the subsequent step.

If a surface-treated layer is formed by a reaction of the surface of SAO particles with the phosphate compound without grinding the slurry, the SAO particles will be crushed or aggregations of the particles will be broken up in the subsequent step. Consequently, the uncoated surface of the SAO particles having poor water resistance will be exposed, resulting in a decrease in the mechanoluminescence intensity.

In contrast, in the case of the mechanoluminescent material of the present invention, the grinding of the slurry makes the particle size sufficiently small, and at the same time, allows the surface of the SAO particles to react with the phosphate compound to form a surface-treated layer. Thus, the mechanoluminescent material has sufficient water resistance.

In the drying after the grinding, the ground slurry may be dried after filtration or may be dried as-is. Non-limiting examples of devices to be used in the drying include direct heating box dryers (parallel, ventilation, fluidized bed), direct heating tunnel dryers, direct heating band dryers (parallel, ventilation), direct heating spray dryers, direct heating sheet dryers, direct heating multistage disk dryers, direct heating vertical turbo dryers, direct heating vertical ventilation dryers, direct heating rotary dryers (direct, ventilation), direct heating vibration dryers, direct heating fluidized bed dryers, direct heating air flow dryers, direct heating foam layer dryers, indirect heating box dryers (vacuum), indirect heating box dryers (freeze vacuum), indirect heating stirring dryers (dish shape, round shape, groove shape), indirect heating rotary dryers, indirect heating drum dryers, infrared ray dryers, high frequency dryers, and ultrasonic dryers.

The mechanoluminescent material of the present invention is preferably obtained by the grinding in a reaction vessel provided with a grinding-media-stirring grinder under a condition that $0.1 \leq G \leq 20$ where G is a relative centrifugal acceleration in m/sec$^2$ that is imparted to the grinding media.

The relative centrifugal acceleration G is more preferably in the range of $0.1 \leq G \leq 10$.

In addition, the mechanoluminescent material is preferably obtained by the grinding for 5 minutes to less than 180 minutes.

The mechanoluminescent material of the present invention is preferably obtained through a heat treatment in an atmosphere at 120°C to 300°C after the drying.

The surface-treated layer becomes denser by the heat treatment after the drying, and the resulting mechanoluminescent material has sufficient water resistance for a longer period of time.

The mechanoluminescent material of the present invention preferably contains 0.2 to 5.0 parts by weight of phosphorus, as elemental phosphorus, derived from the phosphate compound relative to 100 parts by weight of the europium-activated strontium aluminate particles . An amount of less than 0.2 parts by weight may fail to impart sufficient water resistance; whereas an amount of more than 5.0 parts by weight may result in a decrease in the mechanoluminescence intensity.

In the mechanoluminescent material of the present invention, any phosphate compound, such as inorganic phosphate, organic phosphate, and phosphoric acid, can be used. The term "phosphate" as used herein refers to both normal salt and hydrogen salt. Among these, water-soluble salt and phosphoric acid are preferred. Specifically, the phosphate is preferably at least one selected from the group consisting of ammonium phosphate, sodium phosphate, potassium phosphate, sodium polyphosphate, sodium hexametaphosphate, and phosphoric acid.

The method for producing a mechanoluminescent material of the present invention includes the steps of mixing a phosphate compound with europium-activated strontium aluminate particles into slurry; grinding the slurry into ground slurry; and drying the ground slurry.

In addition, the mechanoluminescent coating composition of the present invention contains the mechanoluminescent material of the present invention, and the resin composition of the present invention contains the mechanoluminescent material of the present invention.

In addition, the mechanoluminescent article of the present invention is formed from the resin composition of the present invention.

- Advantageous Effects of Invention

In the case of the mechanoluminescent material of the present invention, the grinding of the slurry makes the particle size sufficiently small so that the SAO particles are less likely to be crushed in the subsequent step, and allows the surface of such SAO particles to react with a phosphate compound to form a surface-treated layer. Thus, the mechanoluminescent material has sufficient water resistance.

BRIEF DESCRIPTION OF THE DRAWINGS

Fig. 1 is a graph showing the results of water resistance test at 40°C on the mechanoluminescent materials of Examples 1 to 3 and Comparative Example 1.
Figs. 2(a) to 2(d) are electron micrographs of the mechanoluminescent materials of Examples 1 to 3 and Comparative Example 1.
Fig. 3 is a graph showing the results of mechanoluminescent performance evaluation after the water resistance test.
Fig. 4 is a graph showing the results of mechanoluminescent performance evaluation after humidity resistance test.
Fig. 5(a) is an electron micrograph of the mechanoluminescent material of Example 3; and Fig. 5(b) is an EDX mapping image of Fig. 5(a). Fig. 5(c) is an electron micrograph of the mechanoluminescent material of Comparative Example 1; and Fig. 5(d) is an EDX mapping image of Fig. 5(c).

DESCRIPTION OF EMBODIMENTS

The mechanoluminescent material of the present invention is described below.
The mechanoluminescent material of the present invention is defined in claim 1 and is a mechanoluminescent material obtained by mixing a phosphate compound and europium-activated strontium aluminate particles into slurry; grinding the slurry into ground slurry; and drying the ground slurry, wherein the rate of change calculated from a formula $(A-B)/A \times 100$ is 10% or less, where A is the strontium content in the obtained mechanoluminescent material, and B is the strontium content in the mechanoluminescent material after 168 hours of storage in an atmosphere at a temperature of 85°C and a relative humidity of 85%.
First the europium-activated strontium aluminate particles are described.
The strontium aluminate is a compound usually represented by $Sr_xAl_yO_z$, wherein $0 < x$, $0 < y$, and $0 < z$. Non-limiting specific examples of the strontium aluminate include compounds such as $SrAl_2O_4$, $SrAl_4O_7$, $Sr_4Al_{14}O_{25}$, $SrAl_{12}O_{19}$, and $Sr_3Al_2O_6$.
The strontium aluminate is preferably synthesized from a strontium source and an aluminum hydroxide or an aluminum raw material containing at least one alumina selected from the group consisting of $\theta$ alumina, $\kappa$ alumina, $\delta$ alumina, $\eta$ alumina, $\chi$ alumina, $\gamma$ alumina, and $\rho$ alumina. The term "alumina" usually refers to inexpensive and general-purposes $\alpha$-alumina. Yet, use of an activated alumina, such as $\theta$-alumina, or aluminum hydroxide as a raw material can lead to higher mechanoluminescence intensity than use of $\alpha$-alumina.
A europium (Eu) ion is contained as an activator. The amount of the Eu ion contained in a mechanoluminescent material is not particularly limited, and it is in the range of 0.0001 to 0.01 mol, preferably and in case of the claimed products in the range of 0.0005 to 0.005 mol, per mole of the strontium aluminate. Too small an amount of the Eu ion may fail to provide sufficient mechanoluminescence intensity, whereas too large an amount thereof may affect other physical properties while the mechanoluminescence intensity is saturated.
The europium-activated strontium aluminate particles may further contain co-activator. Any co-activator may be used, and examples thereof include compounds or ions of rare-earth elements other than Eu. Examples of the rare-earth elements other than Eu include one or more elements selected from Sc, Y, La, Ce, Pr, Nd, Pm, Sm, Gd, Tb, Dy, Ho, Er, Tm, Yb, Lu, and the like. Substitution with other elements having a different ionic radius or a different valence causes lattice defects, and the crystal structure becomes easily distorted. This advantageously results in improved mechanoluminescent performance. Use of Nd, Dy, and Ho as co-activators is particularly preferred because high mechanoluminescence intensity can be achieved.
Examples of the compounds of the rare-earth elements include carbonates, oxides, chlorides, sulfates, nitrates, acetates, and the like of the above elements.
Next, the phosphate compound is described.
The phosphate compound is preferably at least one selected from the group consisting of ammonium phosphate, sodium phosphate, potassium phosphate, sodium polyphosphate, sodium hexametaphosphate, and phosphoric acid.
These phosphate compounds are preferably mixed with water and stirred to form an aqueous solution or suspension before use. An organic solvent, such as methanol, ethanol, propanol, or acetone, which is soluble or miscible in water may be added.

The concentration of the phosphate compound in the aqueous solution or suspension is preferably adjusted to 0.01 to 20 g/100 g of water, preferably 0.5 to 5.0 g/100 g of water, before use. A concentration of the phosphate compound of less than 0.01 g/100 g of water may undesirably result in insufficient coating of the phosphate compound, decreasing the mechanoluminescence intensity; whereas a concentration of the phosphate compound of more than 20 g/100 g of water may undesirably result in a decrease in the mechanoluminescence intensity.

The method for mixing the phosphate compound and the europium-activated strontium aluminate particles into slurry is not particularly limited. For example, the europium-activated strontium aluminate particles may be mixed with an aqueous solution or suspension containing the phosphate compound; or, an aqueous solution or suspension containing the phosphate compound may be added dropwise or the like to the europium-activated strontium aluminate particles.

In addition, as for the mixing ratio of the aqueous solution or suspension containing the phosphate compound to the europium-activated strontium aluminate particles, the amount of the europium-activated strontium aluminate particles is preferably adjusted to 5 to 200 g, preferably 20 to 100 g, relative to 100 g of the aqueous solution or suspension containing the phosphate compound. If the concentration of the europium-activated strontium aluminate is less than 5 g relative to 100 g of the aqueous solution or suspension, undesirably, the drying will take long time due to a low concentration, decreasing the production efficiency. A concentration of more than 200 g relative to 100 g of the aqueous solution or suspension undesirably increases the viscosity, making it difficult to carry out the stirring and grinding in the subsequent step.

The slurry is mixed with grinding media such as alumina balls which are used in the subsequent grinding.

Any grinding medium may be used as long as it is suitable for grinding the europium-activated strontium aluminate particles. Examples include alumina balls, zirconia balls, silicon nitride balls, carbon nitride balls, glass beads, and nylon-coated iron core balls. Those having a diameter of 10 mm or less are generally used. Preferred among these are alumina balls because even if a component of the grinding media is mixed into the mechanoluminescent material, the effect of such a component acting as an impurity is small.

Any known grinder can be used to grind the slurry, but it is preferred to use a reaction vessel provided with a grinding-media-stirring grinder for efficient grinding. The term "grinding-media-stirring grinder" as used herein means a grinder in which grinding media are put into a grinding container with a material to be ground, and these materials are stirred as the grinding container is oscillated or turned (rotated or revolved), or the grinding media are directly stirred in a stirring part, thus achieving grinding. Any grinding-media-stirring grinder may be used, but is preferably one selected from the group consisting of planetary mills, bead mills, and vibrating mills. Particularly preferred are planetary mills which involve rotation and revolution.

The grinding conditions are not particularly limited. The grinding is usually carried out under a condition that $G \leq 100$ where $G$ is the relative centrifugal acceleration in $m/sec^2$ of the grinding-media-stirring grinder which is imparted to the grinding media. Yet, the relative centrifugal acceleration is preferably in the range of $0.1 \leq G \leq 20$, particularly preferably in the range of $0.1 \leq G \leq 10$. Under a condition that $G < 0.1$, undesirably, the grinding will take long time and the surface may not be sufficiently modified, decreasing the production efficiency; or the water resistance may be insufficient. Under a condition that $G > 20$, the mechanoluminescence intensity may undesirably decrease.

As for the grinding, as long as the relative centrifugal acceleration $G$ is in the range of $0.1 \leq G \leq 20$, the grinding time is also not particularly limited and may be set in view of the particle size and the particle size distribution of the mechanoluminescent material before the grinding, but the grinding is carried out preferably for 5 minutes to less than 180 minutes. The grinding for less than 5 minutes may undesirably result in insufficient coating of the phosphate compound; whereas the grinding for 180 minutes or more will undesirably result in a decrease the production efficiency.

The grinding is carried out under a condition that a value obtained by multiplying the relative centrifugal acceleration $G$ ($m/sec^2$) by the grinding time (hr) is preferably in the range of 0.01 to less than 10, more preferably in the range of 0.1 to less than 5.

If the value obtained by multiplying the relative centrifugal acceleration $G$ by the grinding time is less than 0.01, it may undesirably result in insufficient coating of the phosphate compound; whereas if the value is 10 or more, it will undesirably result in a decrease the production efficiency.

If the grinder is a grinding-media-stirring grinder through which the slurry passes (pass method) or circulates (circulation method), first, the retention time is calculated from the volume of a grinding container and the flow rate of slurry per unit time. If the number of passes is two or more in the pass method, the retention time is multiplied by the number of passes to determine the grinding time. In the case of the circulation method, the volume of the slurry is divided by the flow rate per unit time, and the circulation time is divided by the thus-obtained value. The resulting value is the number of passes of the slurry. Subsequently, the retention time is multiplied by the number of passes, as is the case with the pass method, to determine the grinding time.

The term "centrifugal acceleration" as used herein refers to the physical quantity indicated by $r\omega^2$, which is generated when an object is rotated with a rotation radius $r$ and a rotation angle speed of $\omega$. Generally, the unit of the centrifugal acceleration is the "relative centrifugal acceleration" which is the ratio of the centrifugal acceleration to the gravitational acceleration of the earth. For example, in the case of an object rotating about a rotational axis for N times, the relative centrifugal acceleration G can be expressed by the following expression (1), provided that $\omega = 2\pi N/60$ (rad/s) and the gravitational acceleration of the earth = 9.81 (m/s$^2$).

$$G = \frac{\text{Centrifugal accerelation}}{\text{Gravitational acceleration of the earth}}$$

$$= r \cdot \left(\frac{2\pi N}{60}\right)^2 \cdot \frac{1}{9.81} = 1118 \times r \times N^2 \times 10^{-8} \ (G \ or \ \times g) \qquad (1)$$

Further, in the case of a planetary mill which involves rotation and revolution, the relative centrifugal acceleration G can be determined by the following expression (2).

$$G = \left[rs - \left\{rp \cdot \left(\frac{rp}{rs} \cdot (1 + iw)^2\right)\right\}\right] \cdot \frac{\left(2 \cdot \pi \cdot \frac{rpm}{60}\right)^2}{9.81} \qquad (2)$$

In the expression, rs represents the radius of revolution (m); rp represents the radius of the container (m); iw represents the rotation/revolution ratio; and rpm represents the number of revolutions.

The slurry obtained by mixing the phosphate compound and the europium-activated strontium aluminate particles is ground, whereby the SAO particles are ground, and at the same time, a mechanoluminescent material is obtained in which the surface-treated layer obtained by the reaction of the surface of the ground SAO particles with the phosphate compound is uniform and dense.

The obtained mechanoluminescent material and the phosphate compound may be mixed to prepare slurry, followed by further grinding. This process may be repeated several times.

Drying is carried out after the grinding. The term "drying" as used herein means to remove water until the water content in the slurry is 5% by weight or less. Thus, for example, the water in the slurry may be replaced by an organic solvent to reduce the water content to 5% by weight or less. In the case of heat drying, the drying is preferably finished within five hours, preferably within one hour.

The mechanoluminescent material after the drying and the phosphate compound may be mixed to prepare slurry, followed by further grinding and drying. This process may be repeated several times.

Organic matter may be added to the slurry or powder before the drying, between the drying and the heat treatment, or after the heat treatment. Examples of the organic matter include polyacrylic acid-based dispersants, polycarboxylic acid-based dispersants, polyphosphoric acid-based dispersants, aminomethyl propanol, glycerol, trimethylolpropane, diethylene glycol, polyvinyl alcohol, polyacrylic acid, polyacrylate, silane coupling agents, and silicone oil.

These may be used alone or in combination of two or more.

Addition of such organic matter has a potential of improving the dispersibility after the grinding, the fluidity of the powder, and the water resistance.

The heat treatment is carried out after the drying in an atmosphere at 120°C to 300°C. The surface-treated layer becomes denser by the heat treatment after the drying, and the resulting mechanoluminescent material has sufficient water resistance for a longer period of time.

The heat treatment is preferably carried out for one to six hours.

The atmosphere of the heat treatment is not particularly limited, and the heat treatment may be carried out in an atmosphere such as an air atmosphere or an inert gas atmosphere.

The mechanoluminescent material after the heat treatment and the phosphate compound may be mixed to prepare slurry, followed by further grinding, drying, and heat treatment. This process may be repeated several times.

Strontium and aluminium constituting the mechanoluminescent material are both elements that can become hydrates by a reaction with water. Strontium can be particularly easily become a hydrate, and the mechanoluminescent performance will be degraded by an increase in the amount of hydrates. At this point, the weight of the mechanoluminescent material is increased by the amount corresponding to the water reacted, and deterioration is considered to be progressing. Thus, it is preferred that the strontium content in the mechanoluminescent material remains the same even after contact with water.

Specifically, in the mechanoluminescent material of the present invention, the rate of change calculated from a formula $(A-B)/A \times 100$ is 10% or less, where A is the strontium content in the mechanoluminescent material, and B is the strontium content in the mechanoluminescent material after 168 hours of storage in an atmosphere at a temperature of 85°C and a relative humidity of 85%. At a rate of change of more than 10%, the mechanoluminescent performance will be significantly degraded.

The rate of change is preferably 5% or less.

The mechanoluminescent material may further be blended with a dispersant for improving the dispersibility of the particles. Any dispersant may be used. Examples include anionic surfactants and nonionic surfactants. Examples of the anionic surfactants include ammonium polycarboxylate, sodium polycarboxylate, and sodium hexametaphosphate. Examples of the nonionic surfactants include polyoxyethylene alkyl ethers, polyoxyethylene hydrogenated castor oil, polyoxyethylene mono fatty acid esters, and polyoxyethylene sorbitan mono fatty acid esters. These may be used alone or in combination of two or more.

The mechanoluminescent material may further be blended with a flux component for improving the crystallinity of the particles. Any flux component may be used. Examples thereof include compounds such as calcium fluoride, magnesium fluoride, aluminum fluoride, ammonium fluoride, sodium chloride, potassium chloride, lithium chloride, ammonium bromide, ammonium iodide, potassium iodide, sodium hydroxide, potassium hydroxide, ammonium sulfate, sodium sulfate, potassium sulfate, sodium nitrate, ammonium nitrate, boric acid, and sodium borate. These may be used alone or in combination of two or more.

The method for producing the europium-activated strontium aluminate particles as raw materials of the mechanoluminescent material of the present invention is not particularly limited. The strontium aluminate as a base material can be produced by a reaction of alumina with a strontium compound.

Any strontium compound may be used. Examples thereof include strontium carbonate, strontium oxide, strontium hydroxide, strontium halides (e.g., strontium chloride), strontium sulfate, strontium nitrate, and strontium hydrogen phosphate.

Any europium compound may be used. Examples thereof include europium carbonate, europium oxide, europium chloride, europium sulfate, europium nitrate, and europium acetate.

The europium-activated strontium aluminate particles before mixing with the phosphate compound may be further blended with any of the co-activators, dispersants, and flux components.

The method for producing a mechanoluminescent material of the present invention includes the steps of mixing a phosphate compound with europium-activated strontium aluminate particles into slurry; grinding the slurry into ground slurry; and drying the ground slurry.

The method for producing a mechanoluminescent material of the present invention includes the steps described above for the description of the mechanoluminescent material of the present invention. Thus, a detailed description thereof is omitted.

The mechanoluminescent material of the present invention is physically and chemically stable under various conditions. When the mechanoluminescent material is deformed by external mechanical force, the carriers of lattice defects or those of lattice defects and luminescence centers are excited, and then the material emits light when the carriers return to the ground state. A mechanoluminescent article produced by shaping such a mechanoluminescent material of the present invention can be used under various conditions. It can emit light by external mechanical force in the air, in vacuum, or under reduction or oxidation conditions, of course, or in various solution environments such as in water, in an inorganic solution, or in an organic solution. Therefore, the mechanoluminescent article is useful for stress detection under various conditions.

Applications of such a mechanoluminescent material are not particularly limited, and examples thereof include the following.

Formation of a luminescent layer containing the mechanoluminescent material on the exterior surface of regular paper, synthetic paper, polymeric materials (e.g., epoxy resin, polyethylene, polyethylene terephthalate, polyester, polypropylene, polyvinyl chloride), natural or synthetic rubber, glass, ceramics, metal, wood, artificial or natural fibers, and concrete, combination thereof, and processed articles thereof, or containing of the mechanoluminescent material allows for detection of unusual conditions and testing of deterioration of various structures and components by application of a shock wave (stress-strain detection, stress distribution measurement). Examples of the structures and components include large structures such as high-rise buildings, viaducts, bridges, roads, railway rails, pillars, towers, pipelines, and tunnels; building materials such as flooring, tiles, wall materials, blocks, paving materials, wood, steel, and concrete; power transmission members such as gears and cams; exterior parts or internal parts (e.g., engine parts, tires, belts) for bicycles, automobiles, trains, ships, and aircraft; bearing parts, bearing cages, and photosensor-integrated bearings; and fixing parts such as screws, bolts, nuts, and washers. With respect to the applications thereof, it is expected to detect liquid leakage of batteries, valve seats, water pipes, sprinkler heads, and nonaqueous electrolyte secondary batteries into which an electrolytic solution or a polymer electrolyte was charged. Further, the mechanoluminescent material may be contained in adhesive. The stress distribution in the layer of such adhesive can be visualized, which makes it possible to find cracks in the adhesive.

Those including the mechanoluminescent material as a light-emitting element can be utilized for electronic or other devices such as pressure sensitive devices, touch pads, touch sensors, photodiodes or phototransistors, piezoelectric actuators or electrostatic actuators, light-emitting polymeric actuators, liquid level detectors, impulsive force detectors, optical waveguides, optical waveguide devices, mechanical optical devices, detectors, information processing devices, switches, operation buttons, input devices, and key entry devices. They enable wireless control, automation, and remote control of devices and systems. Examples thereof include devices for measuring the heights of connectors of semiconductor components, devices for measuring the amount of generated cavitation, devices for measuring sound pressure distribution, devices for measuring sound pressure distribution and energy density distribution by ultrasonic waves for medical tests, devices for measuring stress-strain distribution applied to an implant or other component mounted on a natural or artificial bone, transmission lines, transmitter and laser processing devices, devices for detecting the amount of torsion of a steering shaft, radiographic devices which specify the position of a part to be photographed, flow velocimeters, devices for checking the degree of parallelism of a press die, solid-state image sensing devices capable of taking a picture by generating a stress corresponding to the heat energy of infrared light, light-emitting heads which convert an external mechanical force such as frictional force, shearing force, impulsive force, or pressure into an optical signal and transmits this optical signal, remote-switching systems which enable remote control of machinery utilizing the light-emitting head, and detection systems for detecting a couple of forces utilizing the light-emitting head, removable-item detectors which can detect the attached or detached state of an item removably attached to the body of an electric, electronic, mechanical, or the like device, such as an ink cartridge or paper feed tray of an inkjet printer, and such removable items; imprinting devices capable of testing ultraviolet-cured resin remained in a protruding or recessed portion in a short time, wireless controllers, small wireless light sources (mechanoluminescent particles) to be used in vivo or in a dark place, testing devices equipped therewith, testing methods, and stress history recording systems. Further, those including the mechanoluminescent material can also be utilized for measurement of the sealability of gaskets and packing, measurement of the shape of the contact patch or contact pressure distribution of a tire, measurement of dental occlusal force, tools for measuring the contact patch of a tire, and methods of measuring the amount of generated cavitation.

The mechanoluminescent material of the invention can also be applied to tactile sensor elements. Examples thereof include human-friendly robots, artificial arms, artificial fingers, and artificial limbs, palpation devices for diagnosis, and hardness/softness testers for various industries. Still other applications are expected, such as measurement of the radioactive exposure dose and the exposure intensity distribution by measuring the light-emitting energy generated by the interaction with radiation.

In addition to the aforementioned measurement devices, the mechanoluminescent material of the invention can also be applied to lighting equipment and indications for safety. Examples thereof include lighting equipment such as device-vibration-powered lamps and wind-powered lamps; devices for marks, signs, and indications of emergency, unusualness alarming, emergency goods, danger, emergency light, emergency signals, and lifesaving equipment; safety fences, ropes put around factory buildings, and animal repellent fences; linear materials for joints half-embedded in steps of stairs, handrails, and passages; health equipment and walking-assist devices (e.g., walking-assist sticks, luminous alarm antennas); fashion accessories such as earrings and necklaces; flag poles, crossing gates of railroad crossings, exterior parts and internal parts of bicycles, automobiles, trains, ships, and aircraft, fishing tackle (e.g., artificial baits, fishing rods, nets for fish-luring; luminous fiber structures, luminous fishing equipment, fishing lines, fishing nets), buoy; position indicators for humans, pets such as dogs and cats, and livestock such as cattle, pigs, sheep, and chickens; fans (e.g., fans for wind power generators, electric fans), clothes (e.g., shoes, sports clothing, artificial luminous clothes, artificial luminous thread, artificial luminous fibers); packaging materials (e.g., boxes, holders, containers, envelopes, cartons, outer coverings, outer films), medical supplies (e.g., breathing-assist devices, experimental and research equipment), and robots (artificial luminous hair structures, artificial luminous skins, artificial luminous bodies).

Examples of applications of paint compositions, ink compositions, adhesives, and surface-coating agents containing a mechanoluminescent material include mails such as crimped postcards including pasting adhesive containing a mechanoluminescent material used in, for example, financial institutions, public institutions, credit card companies, and the distribution business; furniture such as chairs and beds; building materials such as flooring, tiles, wall materials, blocks, paving materials, wood, steel, and concrete, automotive navigation systems mounted on vehicles; controllers for audio equipment or air conditioners; input devices for home electrical appliances, portable devices, or computers; image storage means such as digital cameras, CCD cameras, films, pictures, and videotapes.

Luminescence can lead to novel designs, and thus the mechanoluminescent material can be applied to amusement merchandise such as toys and event merchandise and household goods. Examples of such applications include moving toys, kites, streamers of koinobori, swings, roller coasters, merry-go-rounds, bows and arrows; luminous devices without power sources capable of simultaneously generating sound and light by wind power (e.g., wind-bells); luminous balls (e.g., golf balls, baseballs, table tennis balls, billiard balls) and pinwheels with a luminous mechanism; balloons; those having paper-made sheet-like structures such as party horns, origami, paper balloons, harisen (slapping fans), greeting cards, and picture books; sports equipment (e.g., poles for pole vaulting, long tools such as fencing swords, bows, and arrows); pressure-sensitive seals for checking the hitting point on a golf club, line tape for tennis courts, movable decorations, movable sculpture, movable monuments; movable display devices; impact-luminescent decoration devices; audio equipment such as loudspeakers, musical instruments (e.g., string instruments such as violins and guitars, percussion instruments such as xylophone and drums, wind instruments such as trumpets and flutes, diaphragms such as poppen (item that generates a sound when one blows into it)), and tuning forks; amusement merchandise such as event merchandise; water plants and containers to be used in decorative water tanks for aquariums; luminous watches, luminous hourglasses, hourglass-like luminous devices; luminous pseudo-candles; luminous artificial plants; artificial eyes; cosmetic compositions containing adhesive polymers, visually counterfeit-detectable printed matters and securities, printing inks containing mechanoluminescent particles, invoices, checks, stock certificates, corporate bonds, various financial instruments, gift vouchers, book tokens, tickets of transportation facilities, admission tickets of charged facilities and events, lotteries, winning betting tickets of public gambling sports, banknotes, identification papers, tickets, passes, passports, printed matters including classified documents, and seals.

Mechanoluminescent article/photocatalyst composites whose photocatalyst attached to the surface thereof is activated by mechanoluminescence can be utilized for antifungal treatment, sterilization, treatment of animals other than humans, cleaning of antibacterial articles such as straps and railings of vehicles, cleaning of inner walls of piping at dark places by the fluid energy of fluids. They can also promote crosslinking by activating a photocrosslinker in polymer resin in response to luminescence of the mechanoluminescent material.

The mechanoluminescent material of the present invention can be mixed with a resin to provide a resin composition of the present invention.

In addition, the resin composition of the present invention may be further blended with another inorganic material or organic material into a composite material to provide a mechanoluminescent article of the present invention.

For example, in the case where the resin is an epoxy resin or acrylic resin, 1 to 200 parts by mass of the mechanoluminescent material is added relative to 100 parts by mass of the resin. In the case where the resin is a polyethylene resin or soft polyvinyl chloride resin, 30 to 300 parts by mass of the mechanoluminescent material is added relative to 100 parts by mass of the resin. The mixture is blended using a mixer such as a conical blender, V blender, ribbon blender, Henschel mixer, Banbury mixer, or three-roll mill, whereby a resin composition can be produced.

In addition, a mechanoluminescent article can be formed from the resin composition. In the case of producing a sheet-shaped mechanoluminescent article, for example, 50 to 200 parts by mass of the mechanoluminescent material, 3 to 5 parts by mass of a calcium-zinc stabilizer, and 30 to 100 parts by mass of dioctyl phthalate as a plasticizer are added relative to 100 parts by weight of polyvinyl chloride resin, and the mixture is kneaded using a two-roll mill at a temperature of 150°C to 200°C. Thus, a flexible sheet-shaped mechanoluminescent article can be produced.

In the case of producing a film-shaped mechanoluminescent article, for example, 20 to 50 parts by mass of the mechanoluminescent material are added relative to 100 parts by mass of polyethylene terephthalate resin, and the mixture is kneaded and molded using a twin-screw extruder or inflation molding machine at a temperature of 250°C to 300°C. Thus, the film-shaped mechanoluminescent article can be produced.

In the case of producing a mechanoluminescent article having a different shape, for example, 5 to 100 parts by mass of the mechanoluminescent material are added relative to 100 parts by mass of polypropylene resin, and the mixture is kneaded and molded using a twin-screw extruder at a temperature of 170°C to 200°C. Thus, a mechanoluminescent article having a string, plate, bar, or pellet shape can be produced. In addition, a pellet-shaped mechanoluminescent article can be molded using an injection molder at a temperature of 170°C to 200°C into a three-dimensional mechanoluminescent article.

When an external mechanical force is applied to this mechanoluminescent article, the mechanoluminescent article is mechanically deformed to emit light.

Examples of the resin or other organic materials include resins such as thermoplastic resins and thermosetting resins. Examples of the thermoplastic resins include polyethylene such as low-density polyethylene, medium-density polyethylene, high-density polyethylene, and linear low-density polyethylene, polypropylene, polystyrene, polyvinyl chloride, polyvinyl fluoride, polyvinylidene chloride, styrene polymers or copolymers such as acrylonitrile-butadiene-styrene copolymers (ABS resin), polyamide such as 6-nylon, 66-nylon, and 12-nylon, polyamide-imide, polyimide, polyetherimide, polyurethane, acrylic resins such as polymethyl methacrylate, polyvinyl acetate, ethylene-vinyl acetate copolymers, fluororesins such as polyvinylidene fluoride and polytetrafluoroethylene, alkenyl aromatic resins, polyesters such as polyethylene terephthalate, polybutylene terephthalate, polyethylene naphthalate, and polylactic acid, polycarbonates such as bisphenol A-type polycarbonate, polyacetal, polyphenylene sulfide, polymethyl pentene, cellulose, polyvinyl alcohol, polyvinyl acetal, polyacrylic acids such as polyacrylonitrile, styrene-acrylonitrile copolymers (AS resin), polyphenylene ether (PPE), modified PPE, polyarylate, polyphenylene sulfide, polysulfone, polyether sulfone, polyether nitrile, polyether ketone, polyketone, liquid crystal polymers, ethylene-propylene copolymers, copolymers of ethylene or propylene and another $\alpha$-olefin (e.g., butene-1, pentene-1, hexene-1, 4-methyl pentene-1), and copolymers of ethylene and another unsaturated ethylenic monomer (e.g., vinyl acetate, acrylic acid, acrylic acid ester, methacrylic acid, methacrylic acid ester, vinyl alcohol).

These thermoplastic resins may be used alone or in combination of two or more. If the thermoplastic resin is a copolymer, it may be in any form such as a random copolymer or a block copolymer.

Examples of the thermosetting resins include phenol resin, urea resin, melamine resin, unsaturated polyester resin, diallyl phthalate resin, epoxy resin, silicone resin, alkyd resin, polyimide, poly (amino bismaleimide), casein resin, fran resin, and urethane resin. Further, resins curable by ultraviolet rays or radiation may be mentioned.

Examples of the thermoplastic resins may also include rubbery materials such as natural rubber, polyisoprene rubber, styrene-butadiene rubber, polybutadiene rubber, ethylene-propylene-diene rubber, butyl rubber, chloroprene rubber, acrylonitrile-butadiene rubber, and silicone rubber.

The mechanoluminescent material of the present invention may be further mixed with any of pigments, dyes, lubricants, antioxidants, ultraviolet absorbers, photostabilizers, antistatic agents, flame retardants, fungicides, antibacterial agents, curing catalysts, and photopolymerization initiators and shaped into any form such as rod, plate, film, fiber, membrane, needle, sphere, foil, particle, sand, scale, sheet, liquid, gel, sol, suspension, aggregate, or capsule.

Examples of the pigments include inorganic pigments and organic pigments. Examples of the inorganic pigments include titanium oxide, barium sulfate, calcium carbonate, zinc oxide, lead sulfate, chrome yellow, zinc yellow, Bengala (red iron (III) oxide), cadmium red, ultramarine, Prussian blue, chromium oxide green, cobalt green, umber, titanium black, artificial iron black, carbon black, mica, aluminum oxide coated with titanium oxide or iron oxide, mica coated with titanium oxide or iron oxide, glass flakes, and holographic pigments. Examples of other metal powder pigments include aluminum powder, copper powder, stainless steel powder, metal colloid, and those having an interference effect, such as transparent pearl mica, colored mica, interference mica, interference alumina, and interference silica (interference glass).

Examples of the organic pigments include yellow pigments such as azo-based pigments (e.g., monoazo yellow, condensed azo yellow, azomethine yellow), yellow iron oxide, titan yellow, bismuth vanadate, benzimidazolone, isoindolinone, isoindoline, quinophthalone, benzidine yellow, and permanent yellow; orange pigments such as permanent orange; red pigments such as red iron oxide, naphthol AS-based azo red, anthanthrone, anthraquinonyl red, perylene maroon, quinacridone red, diketopyrrolopyrrole red, and permanent red; violet pigments such as cobalt violet, quinacridone violet, dioxazine violet; blue pigments such as cobalt blue, phthalocyanine-based pigments (e.g., phthalocyanine blue), and threne blue; green pigments such as phthalocyanine green, and organic dyes such as azo-based disperse dyes and anthraquinone-based disperse dyes.

Examples of the dyes include azo dyes, anthraquinone dyes, indigoid dyes, sulfur dyes, triphenyl methane dyes, pyrazolone dyes, stilbene dyes, diphenyl methane dyes, xanthene dyes, alizarin dyes, acridine dyes, quinone imine dyes (e.g., azine dyes, oxazine dyes, thiazine dyes), thiazole dyes, methine dyes, nitro dyes, and nitroso dyes.

Examples of the antioxidants include hindered phenol compounds, phosphite compounds, phosphonite compounds, and thioether compounds.

Examples of the hindered phenol compounds include α-tocopherol, butylated hydroxytoluene, sinapyl alcohol, vitamin E, n-octadecyl-β-(4'-hydroxy-3',5'-di-tert-butyl phenyl)propionate, 2-tert-butyl-6-(3'-tert-butyl-5'-methyl-2'-hydroxybenzyl)-4 -methylphenyl acrylate, 2,6-di-tert-butyl-4-(N,N-dimethylaminomethyl)phenol, diethyl 3,5-di-tert-butyl-4-hydroxybenzyl phosphonate, 2,2'-methylenebis (4-methyl-6-tert-butylphenol), 2,2'-methylenebis (4-ethyl-6-tert-butylphenol), 4,4'-methylenebis (2,6-di-tert-butylphenol), 2,2'-methylenebis(4-methyl-6-cyclohexyl phenol), 2,2'-dimethylenebis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl)propi onate, 1,6-hexanediol bis[3-(3,5-di-tert-butyl-4-hydroxyphenyl)propionate], bis[2-tert-butyl-4-methyl-6-(3-tert-butyl-5-methyl-2-hydrox ybenzyl)phenyl]terephthalate, 3,9-bis{2-[3-(3-tert-butyl-4-hydroxy-5-methylphenyl)propion yloxy]-1,1,-dimethylethyl}-2,4,8,10-tetraoxaspiro[5,5]undec ane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl) sulfide, 4,4'-dithiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl )propionate], 2,4-bis(n-octylthio)-6-(4-hydroxy-3',5'-di-tert-butylanilin o)-1,3,5-triazine, N,N'-hexamethylenebis-(3,5-di-tert-butyl-4-hydroxyhydrocinn amide), N,N'-bis[3-(3,5-di-tert-butyl-4-hydroxyphenyl)propionyl]hyd razine, 1,1,3-tris(2-methyl-4-hydroxy-5-tert-butyl phenyl)butane, 1,3,5-trimethyl-2,4,6-tris(3,5-di-tert-butyl-4-hydroxybenzy l)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocya nurate, 1,3,5-tris 2[3(3,5-di-tert-butyl-4-hydroxyphenyl)propionyloxy]ethyl isocyanurate, and tetrakis[methylene-3-(3',5'-di-tert-butyl-4-hydroxyphenyl)p ropionate]methane.

Examples of the phosphite compounds include triphenyl phosphite, tris(nonylphenyl)phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, tris(diethylphenyl)phosphite, tris(di-iso-propylphenyl)phosphite, tris(di-n-butylphenyl)phosphite, tris(2,4-di-tert-butylphenyl)phosphite, tris(2,6-di-tert-butylphenyl)phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis{2,4-bis(1-methyl-1-phenylethyl)phenyl}pentaerythritol diphosphite, phenyl bisphenol A pentaerythritol diphosphite, bis(nonylphenyl)pentaerythritol diphosphite, and dicyclohexyl pentaerythritol diphosphite. Examples of other phosphite compounds include those reactive with a dihydric phenol and having a cyclic structure.

Examples of the phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite, and bis(2,6-di-tert-butylphenyl)-3-phenyl-phenyl phosphonite.

Examples of the thioether compounds include dilauryl thiodipropionate, ditridecyl thiodipropionate, dimyristyl thiodipropionate, distearyl thiodipropionate, pentaerythritol-tetrakis(3-laurylthiopropionate), pentaerythritol-tetrakis(3-dodecylthiopropionate), pentaerythritol-tetrakis(3-octadecylthiopropionate), pentaerythritol-tetrakis(3-myristylthiopropionate), and pentaerythritol-tetrakis(3-stearylthiopropionate).

Examples of the photostabilizers, including ultraviolet absorbers, include benzophenone compounds, benzotriazole compounds, aromatic benzoate compounds, oxalic anilide compounds, cyanoacrylate compounds, and hindered amine compounds.

Examples of the benzophenone compounds include benzophenone, 2,4-dihydroxybenzophenone, 2,2'-dihydroxybenzophenone, 2,2',4,4'-tetrahydroxybenzophenone, 2-hydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-octoxybenzophenone, 2-hydroxy-4-dodecyloxybenzophenone, 2-hydroxy-4-octoxybenzophenone, 2-hydroxy-4-methoxy-5-sulfobenzophenone, 5-chloro-2-hydroxybenzophenone, 2-hydroxy-4-octoxybenzophenone, 2-hydroxy-4-methoxy-2'-carboxybenzophenone, and 2-hydroxy-4-(2-hydroxy-3-methyl-acryloxyisopropoxy)benzophe none.

Examples of the benzotriazole compounds include 2-(5-methyl-2-hydroxyphenyl)benzotriazole, 2-(3,5-di-tert-butyl-2-hydroxyphenyl)benzotriazole, 2-(3,5-di-tert-amyl-2-hydroxyphenyl)benzotriazole, 2-(3',5'-di-tert-butyl-4'-methyl-2'-hydroxyphenyl)benzotria zole, 2-(3,5-di-tert-amyl-2-hydroxyphenyl)-5-chlorobenzotriazole, 2-(5-tert-butyl-2-hydroxyphenyl)benzotriazole, 2-[2'-hydroxy-3',5'-bis($\alpha,\alpha$-dimethylbenzyl)phenyl]benzotria zole, 2-[2'-hydroxy-3',5'-bis($\alpha,\alpha$-dimethylbenzyl)phenyl]-2H-benzo triazole, and 2-(4'-octoxy-2'-hydroxyphenyl)benzotriazole.

Examples of the aromatic benzoate compounds include alkylphenyl salicylates such as p-tert-butylphenyl salicylate and p-octylphenyl salicylate.

Examples of the oxalic anilide compounds include 2-ethoxy-2'-ethyl oxalic acid bisanilide, 2-ethoxy-5-tert-butyl-2'-ethyl oxalic acid bisanilide, and 2-ethoxy-3'-dodecyl oxalic acid bisanilide.

Examples of the cyanoacrylate compounds include ethyl-2-cyano-3,3'-diphenyl acrylate and 2-ethylhexyl-cyano-3,3'-diphenyl acrylate.

Examples of the hindered amine compounds include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-octadecyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, 1,2-bis(2,2,6,6-tetramethyl-4-piperidyloxy)-ethane, $\alpha,\alpha'$-bis(2,2,6,6-tetramethyl-4-piperidyloxy)-p-xylene, bis(2,2,6,6-tetramethyl-4-piperidyl)-tolylene-2,4-dicarbama te, bis(2,2,6,6-tetramethyl-4-piperidyl)-hexamethylene-1,6-dica rbamate, tris(2,2,6,6-tetramethyl-4-piperidyl)-benzene-1,3,5-tricarb oxylate, tris(2,2,6,6-tetramethyl-4-piperidyl)-benzene-1,3,4-tricarb oxylate, 1-2-{3-(3,5-di-tert-butyl-4-hydroxyphenyl)propionyloxy}-2,2 ,6,6-tetramethylpiperidine, and condensates of 1,2,3,4-butanetetracarboxylic acid, 1,2,2,6,6-pentamethyl-4-piperidinol, and $\beta,\beta,\beta',\beta'$-tetramethyl-3,9-[2,4,8,10-tetraoxaspiro(5,5)undec ane]dimethanol.

Examples of the antistatic agents include inorganic antistatic agents, such as carbon powder (e.g., carbon black, graphite), metal oxides (e.g., tin-antimony complex oxides, antimony-indium-tin complex oxides, indium-tin complex oxides, conductive indium oxides doped with ions such as Sn, F, or Cl, tin oxide, zinc oxide), particles (powder) of metal (e.g., copper, nickel, silver, gold, aluminum), and metal fibers, and organic antistatic agents, such as quaternary ammonium salts (e.g., ($\beta$-lauramidepropionyl)trimethyl ammonium sulfate, sodium dodecylbenzene sulfonate), sulfonic acid salt compounds, and alkyl phosphate compounds.

Examples of the flame retardants include inorganic flame retardants such as bromine flame retardants, phosphorus flame retardants, chlorine flame retardants, triazine flame retardants, and salts of phosphoric acid and piperazine.

Examples of the bromine flame retardants include compounds such as brominated polystyrenes, brominated polyacrylates, brominated polyphenylene ethers, brominated bisphenol A epoxy resins, modified products of brominated bisphenol A epoxy resin whose glycidyl groups at molecular ends are partially or completely blocked, polycarbonate oligomers synthesized from brominated bisphenol A as a raw material, brominated diphthalimide compounds, brominated biphenyl ethers, and brominated diphenyl alkanes such as 1,2-di(pentabromophenyl)ethane. Especially mentioned among these are brominated polystyrenes such as polytribromostyrene, poly(dibromophenyleneoxide), decabromodiphenyl ether, bis(tribromophenoxy)ethane, 1,2-di(pentabromophenyl)ethane, ethylene-bis-(tetrabromophthalimide), tetrabromo bisphenol A, brominated polycarbonate oligomers, brominated polystyrenes such as polytribromostyrene, and 1,2-di (pentabromophenyl) ethane.

Examples of the phosphorus flame retardants include trimethyl phosphate, triethyl phosphate, tributyl phosphate, tri(2-ethylhexyl)phosphate, tributoxyethyl phosphate, triphenyl phosphate, tricresyl phosphate, trixylenyl phosphate, tris(isopropylphenyl)phosphate, tris(phenylphenyl)phosphate, trinaphthyl phosphate, cresyldiphenyl phosphate, xylenyldiphenyl phosphate, diphenyl(2-ethylhexyl)phosphate, di(isopropylphenyl)phenyl phosphate, monoisodecyl phosphate, 2-acryloyloxyethyl acid phosphate, 2-methacryloyloxyethyl acid phosphate, diphenyl-2-acryloyloxyethyl phosphate, diphenyl-2-methacryloyloxyethyl phosphate, melamine phosphate, dimelamine phosphate, melamine pyrophosphate, triphenylphosphine oxide, tricresylphosphine oxide, phosphates such as diphenylmethane phosphonate and diethylphenyl phosphonate, and aromatic condensed phosphates such as resorcinol polyphenyl phosphate, 1,3-phenylene bis(2,6-dimethylphenyl phosphate), resorcinol poly (di-2,6-xylyl) phosphate, bisphenol A polycresyl phosphate, bisphenol A polyphenyl phosphate, hydroquinone poly(2, 6-xylyl)phosphate, and condensates thereof.

Examples of the chlorine flame retardants include pentachloropentacyclodecane, hexachlorobenzene, pentachlorotoluene, tetrachlorobisphenol A, and polychlorostyrene.

Examples of the triazine flame retardants include melamine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

Examples of the salts of phosphoric acid and piperazine include piperazine orthophosphate, piperazine pyrophosphate, and piperazine polyphosphate.

Examples of the inorganic flame retardants include antimony compounds such as antimony trioxide and antimony tetrachloride, zinc borate, sodium borate, aluminum hydroxide, magnesium hydroxide, and red phosphorus.

Examples of the fungicides include copper fungicides such as oxine copper, organosulfur fungicides such as zineb and maneb, organochlorine fungicides such as captan and chlorothalonil, benzoimidazole fungicides such as thiophanate-methyl, benomyl, carbendazole, and thiabendazole, dicarboxyimide fungicides such as iprodione, vinclozolin, and procymidone, acid amide fungicides such as furametpyr, phenylpyrrole fungicides such as fludioxonil, morpholine fungicides such as dimethomorph, methoxy acrylate fungicides such as azoxystrobin, kresoxim-methyl, and oribright, anilinopyrimidine fungicides such as mepanipyrim, cyprodinil, and pyrimethanil, ergosterol biosynthesis inhibitors such as triadimefon and triflumizole, soil disinfectants such as chloropicrin and PCNB, as well as fluazinam, o-phenyl phenol (OPP), diphenyl, chlorodiphenyl, cresol, 1,2-bis(bromoacetoxy)ethane, cinnamaldehyde, phenyl acetate, allyl isothiocyanate, $\alpha$-methylacetophenone, thymol, perchlorocyclopentadiene, bromoacetic acid, 2,2-dibromo-3-nitrile propionamide, ethyl chloroacetate, butyl chloroacetate, methyl chloroacetate, 5-chloro-2-methylisothiazolin-3-one, glutaraldehyde, and hinokitiol.

Examples of the antibacterial agents include inorganic powder including one or more antibacterial metals such as silver, zinc, and copper supported on an inorganic compound. Examples of the supporter include zeolites, apatites, zirconium phosphate, titanium oxide, silica gel, aluminum hydrogen sulfate, calcium phosphate, and calcium silicate. Examples further include antibacterial glass powder including glass made of one or more glass components such as phosphoric acid glass, boric acid glass, and silicic acid glass and one or more antibacterial metals such as silver, zinc, and copper contained therein.

Examples of the lubricants include fatty acids, fatty acid metal salts, hydroxy fatty acids, paraffins, low molecular weight polyolefins, fatty acid amides, alkylene bis-fatty acid amides, aliphatic ketones, partially saponified fatty acid esters, fatty acid lower alcohol esters, fatty acid polyhydric alcohol esters, fatty acid polyglycol esters, and modified silicones.

Examples of the fatty acids include C6-C40 fatty acids such as oleic acid, stearic acid, lauric acid, hydroxy stearic acid, behenic acid, arachidonic acid, linoleic acid, linolenic acid, ricinoleic acid, palmitic acid, montanic acid, and mixtures thereof. Examples of the fatty acid metal salts include alkali (or alkaline-earth) metal salts of a C6-C40 fatty acid, such as sodium laurate, potassium laurate, magnesium laurate, calcium laurate, zinc laurate, barium laurate, sodium stearate, potassium stearate, magnesium stearate, calcium stearate, zinc stearate, barium stearate, sodium behenate, potassium behenate, magnesium behenate, calcium behenate, zinc behenate, barium behenate, sodium montanate, and calcium montanate.

Examples of the hydroxy fatty acids include 1,2-hydroxystearic acid.

Examples of the paraffins include those having 18 or more carbon atoms such as liquid paraffin, natural paraffin, microcrystalline wax, and petrolatum.

Examples of the low molecular weight polyolefins include those having a molecular weight of 5000 or lower such as polyethylene wax, maleic acid-modified polyethylene wax, oxidized polyethylene wax, chlorinated polyethylene wax, and polypropylene wax. Specific examples of the fatty acid amides include those having 6 or more carbon atoms such as oleic acid amide, erucic acid amide, and behenic acid amide.

Examples of the alkylene bis-fatty acid amides include those having 6 or more carbon atoms such as methylenebis stearic acid amide, ethylenebis stearic acid amide, and N,N-bis(2-hydroxyethyl)stearic acid amide.

Examples of the aliphatic ketones include those having 6 or more carbon atoms such as higher aliphatic ketones.

Examples of the partially saponified fatty acid esters include partially saponified montanic acid esters.

Examples of the fatty acid lower alcohol esters include stearates, oleates, linoleates, linolenates, adipates, behenates, arachidonates, montanates, and isostearates.

Examples of the fatty acid polyhydric alcohol esters include glycerol tristearate, glycerol distearate, glycerol monostearate, pentaerythritol tetrastearate, pentaerythritol tristearate, pentaerythritol dimyristate, pentaerythritol monostearate, pentaerythritol adipate stearate, and sorbitan monobehenate.

Examples of the fatty acid polyglycol esters include polyethylene glycol fatty acid esters, polytrimethylene glycol fatty acid esters, and polypropylene glycol fatty acid esters.

Examples of the modified silicones include polyether-modified silicones, higher fatty acid alkoxy-modified silicones, higher fatty acid-containing silicones, higher fatty acid ester-modified silicones, methacryl-modified silicones, and fluorine-modified silicones.

Examples of the curing catalysts include organic peroxides such as t-butyl peroxybenzoate, benzoyl peroxide, methyl ethyl ketone peroxide, and azo compounds (e.g., azobisisobutyronitrile and azobisisovaleronitrile), organic metal derivatives such as salts of metals and organic or inorganic acids, including tin octylate, dibutyltin di(2-ethylhexanoate), dioctyltin di(2-ethylhexanoate), dioctyltin diacetate, dibutyltin dilaurate, dioctyltin dilaurate, dibutyltin oxide, dioctyltin oxide, dibutyltin fatty acid salts, lead 2-ethylhexanoate, zinc octylate, zinc naphthenate, fatty acid zinc, cobalt naphthenate, calcium octylate, copper naphthenate, lead 2-ethylhexanoate, lead octylate, and tetra-n-butyl titanate, inorganic acids such as hydrochloric acid, nitric acid, and sulfuric acid, sulfonic acid compounds such as p-toluenesulfonic acid, dodecylbenzenesulfonic acid, dinonylnaphthalenesulfonic acid, and dinonylnaphthalenedisulfonic acid, amine-neutralized sulfonic acid compounds, organic amines such as triethyl amine, phosphoric acid, pyrophosphoric acid, and phosphoric acid mono or diesters. Examples of the phosphoric acid mono esters include monooctyl phosphate, monopropyl phosphate, and monolauryl phosphate. Examples of the phosphoric acid diesters include dioctyl phosphate, dipropyl phosphate, and dilauryl phosphate. Examples further include phosphorus acid compounds such as mono(2-(meth)acryloyloxyethyl)acid phosphate, diazabicycloundecene-based catalysts, Lewis acids, and anhydrides.

Examples of the photopolymerization initiators include hydroxybenzoyl compounds (e.g., 2-hydroxy-2-methyl-1-phenylpropan-1-one, 1-hydroxycyclohexyl phenyl ketone, benzoin alkyl ethers), benzoyl formate compounds (e.g., methylbenzoyl formate), thioxanthone compounds (e.g., isopropyl thioxanthone), benzophenone compounds (e.g., benzophenone), phosphoric acid ester compounds (e.g., 1,3,5-trimethyl benzoyldiphenyl phosphine oxide), and benzyldimethyl ketal.

The mechanoluminescent material of the present invention can be mixed with a coating to provide the mechanoluminescent coating composition of the present invention.

The mechanoluminescent coating composition of the present invention may be applied to the surface of other materials. When an external mechanical force is applied to a material coated with the mechanoluminescent material, the mechanoluminescent material layer on the material surface is deformed to emit light. Since the mechanoluminescent coating composition of the present invention containing the mechanoluminescent material of the present invention has high mechanoluminescence intensity, it can provide highly noticeable coating.

The coating composition to be used may be a coating composition containing a film-forming resin. The coating composition may contain any coating additives such as solvents, dispersants, fillers, thickening agents, levelling agents, curing agents, crosslinkers, pigments, antifoams, antioxidants, photostabilizers (including ultraviolet absorbers), flame retardants, curing catalysts, fungicides, and antibacterial agents.

Examples of materials for the coating composition include various resins such as thermosetting resin, room-temperature-curable resin, UV-curable resin, and radiation-curable resin. Specific examples thereof include acrylic resin, alkyd resin, urethane resin, polyester resin, amino resin, organosilicates, and organotitanates. Examples of ink-film-forming materials include urethane resin, acrylic resin, polyamide resin, vinyl chloride-vinyl acetate resin, and chlorinated propylene resin.

Examples of the solvents include aliphatic hydrocarbons, aromatic hydrocarbons (C7 to C10, e.g., toluene, xylene, and ethyl benzene), esters or ether esters (C4 to C10, e.g., methoxybutyl acetate), ethers (C4 to C10, e.g., tetrahydrofuran, monoethyl ether of EG, monobutyl ether of EG, monomethyl ether of PG, and monoethyl ether of DEG), ketones (C3 to C10, e.g., methyl isobutyl ketone, di-n-butyl ketone), alcohols (C1 to C10, e.g., methanol, ethanol, n- and i-propanol, n-, i-, sec-, and t-butanol, 2-ethylhexyl alcohol), amides (C3 to C6, e.g., dimethyl formamide, dimethyl acetamide, N-methylpyrrolidone), sulfoxides (C2 to C4, e.g., dimethyl sulfoxide), solvent mixtures of two or more of these solvents, and water or the aforementioned solvent mixtures.

Examples of the dispersants include low-molecular-weight dispersants and high-molecular-weight dispersants. Examples of the high-molecular-weight dispersants include formalin condensates of naphthalene sulfonates (alkali metal (e.g. , Na, K) salts, ammonium salts), polystyrene sulfonates (the same salts as mentioned above), polyacrylates (the same salts as mentioned above), salts (the same salts as mentioned above) of polycarboxylic acids (2 to 4 units, e.g., maleic acid/glycerin/monoallyl ether copolymers), carboxymethyl cellulose (Mn: 2,000 to 10,000), and polyvinyl alcohols (Mn: 2,000 to 100,000).

Examples of the low-molecular-weight dispersants include the following.

(1) Polyoxyalkylene type

Examples thereof include (C2 to C4) AO (1 to 30 mol) adducts of (C4-C30) aliphatic alcohols, of ((C1 to C30) alkyl)phenols, of (C4-C30) aliphatic amines, and of (C4-C30) aliphatic amides.

Examples of the aliphatic alcohols include n-, i-, sec-, and t-butanol, octanol, and dodecanol; Examples of the (alkyl) phenols include phenol, methylphenol, and nonylphenol; Examples of the aliphatic amines include lauryl amine and methyl stearyl amine; Examples of the aliphatic amides include stearamide.

(2) Polyhydric alcohol type

Examples thereof include monoester compounds of C4-C30 fatty acids (e.g., lauric acid, stearic acid) and (dihydric to hexahydric or more) polyhydric alcohols (e.g., GR, PE, sorbitol, and sorbitan).

(3) Carboxylate type

Examples thereof include alkali metal (the same as mentioned above) salts of C4-C30 fatty acids (the same as mentioned above).

(4) Sulfuric acid ester type

Examples thereof include sulfuric acid ester alkali metal (the same as mentioned above) salts of C4-C30 aliphatic alcohols and of (C2 to C4) AO (1 to 30 mol) adducts of aliphatic alcohols (the same as mentioned above).

(5) Sulfonate type

Examples thereof include sulfonic acid alkali metal (the same as mentioned above) salts of ((C1-C30) alkyl)phenols (the same as mentioned above).

(6) Phosphoric acid ester type

Examples thereof include salts (e.g., alkali metal (the same as mentioned above) salts, quaternary ammonium salts) of mono- or di-phosphoric acid esters of C4-C30 aliphatic alcohols (the same as mentioned above) and of (C2-C4) AO (1 to 30 mol) adducts of aliphatic alcohols.

(7) Primary to tertiary amine salt type

Examples thereof include hydrochlorides of C4-C30 aliphatic amines (primary amines (e.g., lauryl amine), secondary amines (e.g., dibutyl amine), and tertiary amines (e.g., dimethyl stearyl amine)), and inorganic acid (e.g., hydrochloric acid, sulfuric acid, nitric acid, and phosphoric acid) salts of monoesters of triethanol amine and C4-C30 fatty acids (the same as mentioned above).

(8) Quaternary ammonium salt type

Examples thereof include inorganic acid (the same as mentioned above) salts of C4-C30 quaternary ammonium (e.g., butyl trimethyl ammonium, diethyl lauryl methyl ammonium, dimethyl distearyl ammonium).

Examples of the inorganic dispersants include alkali metal (the same as mentioned above) salts of polyphosphoric acid and phosphoric acid-based dispersants (e.g., phosphoric acid, monoalkyl phosphates, and dialkyl phosphates).

Examples of the fillers include oxide-based inorganic matters such as silica, alumina, zirconia, and mica, fine powder of non-oxide-based inorganic matter such as silicon carbide and silicon nitride, and organic compounds such as acrylic resin and fluororesin. In accordance with the applications thereof, metal powder of aluminum, zinc, copper, or the like may be added. Specific examples of the fillers include sols such as silica sol, zirconia sol, alumina sol, and titania sol; silica-based matters such as silica sand, quartz, novaculite, and diatomaceous earth; synthesized amorphous silica; silicates such as kaolinite, mica, talc, wollastonite, asbestos, calcium silicate, and aluminum silicate; glass materials such as glass powder, glass spheres, hollow glass spheres, glass flakes, and foam glass spheres; non-oxide-based inorganic matters such as boron nitride, boron carbide, aluminum nitride, aluminum carbide, silicon nitride, silicon carbide, titanium borate, titanium nitride, and titanium carbide; calcium carbonate; metal oxides such as zinc oxide, alumina, magnesia, titanium oxide, and beryllium oxide; other inorganic matters such as barium sulfate, molybdenum disulfide, tungsten disulfide, and carbon fluoride; metal powder of aluminum, bronze, lead, stainless steel, and zinc; and carbonaceous matters such as carbon black, coke, graphite, pyrolytic carbon, and hollow carbon spheres.

Examples of the thickening agents include inorganic filler-type thickening agents such as montmorillonite-based clay minerals, bentonite containing such minerals, and colloidal alumina; cellulose-type thickening agents such as methyl cellulose, carboxymethyl cellulose, hexylmethyl cellulose, hydroxyethyl cellulose, and hydroxypropyl cellulose; urethane resin-type thickening agents; polyvinyl-type thickening agents such as polyvinyl alcohol, polyvinylpyrrolidone, and polyvinyl benzyl ether copolymers; polyether resin-type thickening agents such as polyether dialkyl esters, polyether dialkyl ethers, and epoxy-modified polyethers; associative thickening agents such as urethane-modified polyethers; special polymeric nonionic thickening agents such as polyether polyol-type or urethane resin-type thickening agents; surfactant-type thickening agents such as nonionic thickening agents; protein-type thickening agents such as casein, sodium caseinate, and ammonium caseinate; and acrylic acid-type thickening agents such as sodium alginate.

Examples of the leveling agents include PEG-type nonionic surfactants (e.g., nonyl phenol EO (1 to 40 mol) adducts, stearic acid EO (1 to 40 mol) adducts), polyhydric alcohol-type nonionic surfactants (e.g., sorbitan monopalmitate, sorbitan monostearate, sorbitan tristearate), fluorine-containing surfactants (e.g., perfluoroalkyl EO (1 to 50 mol) adducts, perfluoroalkyl carboxylic acid salts, perfluoroalkyl betaine), and modified silicone oil (e.g., polyether-modified silicone oil, (meth)acrylate-modified silicone oil).

Examples of curing agents for polyol include cold-curable isocyanates such as hexamethylene diisocyanate, trimethylhexamethylene diisocyanate, isophorone diisocyanate, hydrogenated diphenylmethane diisocyanate, diphenylmethane diisocyanate, xylylene diisocyanate, hydrogenated xylylene diisocyanate, tolylene diisocyanate, hydrogenated tolylene diisocyanate, lysine diisocyanate, polyisocyanate compounds in the form of isocyanurate or biuret, polyol (e.g., ethylene glycol, propylene glycol, trimethylol propane) adducts of polyisocyanate compounds, block polyisocyanate curing agents used alone or in combination of two or more, polyol adducts thereof, and copolymers and block polymers thereof. Examples of curing agents for epoxy resin include anhydrides, phenol resin, polyamide resin, amine adducts, urea resin, melamine resin, and isocyanates.

Examples of the crosslinkers include melamine resin, urea resin, polyisocyanate compounds, block polyisocyanate compounds, epoxy compounds or resin, carboxyl group-containing compounds or resin, anhydrides, alkoxysilane group-containing compounds or resin, and compounds having a hydroxymethyl group and a methoxymethyl or ethoxymethyl group such as hexamethoxy methylated melamine, N,N,N',N'-tetrahydroxymethyl succinamide, tetramethoxy methylated urea, and 2,4,6-tetrahydroxy methylated phenol.

Examples of the pigments include those mentioned above, as well as vanadium compounds such as vanadium pentaoxide, calcium vanadate, magnesium vanadate, and ammonium metavanadate; phosphate-type rustproof pigments such as magnesium phosphate, magnesium/ammonium phosphate eutectoid compounds, magnesium monohydrogen phosphate, magnesium dihydrogen phosphate, magnesium/calcium phosphate eutectoid compounds, magnesium/cobalt phosphate eutectoid compounds, magnesium/nickel phosphate eutectoid compounds, magnesium phosphite, magnesium/calcium phosphite eutectoid compounds, aluminum dihydrogen tripolyphosphate, magnesium tripolyphosphate, products of treating phosphoric acid metal salts with magnesium-containing compounds, such as aluminum dihydrogen tripolyphosphate treated with magnesium oxide and zinc dihydrogen tripolyphosphate treated with magnesium oxide, and silica-modified compounds of magnesium phosphate such as silica-modified magnesium phosphate; rustproof pigments containing a zinc component such as zinc phosphate, zinc free-rustproof pigments such as magnesium-treated aluminum dihydrogen tripolyphosphate and calcium-treated calcium phosphate; calcium silicates such as composite calcium silicates including calcium orthosilicate components or calcium metasilicate components; metal ion-exchanged silica such as calcium ion-exchanged silica and magnesium ion-exchanged silica; and rustproof pigments containing hexavalent chromium or lead.

Examples of the antifoams include silicone-type antifoams such as silicone oil, dimethyl polysiloxane, modified organopolysiloxane, and fluorine-modified polysiloxane, mineral oil-type antifoams, non-silicone polymer-type antifoams, antifoams containing at least one selected from the group consisting of modified organofluorine compounds and polyoxyalkylene compounds, and antifoams formed of a C18 or more aliphatic alcohol.

Examples of the antioxidants, photostabilizers (including ultraviolet absorbers), flame retardants, curing catalysts, fungicides, and antibacterial agents include the same as mentioned above.

EXAMPLES

The present invention will be more specifically described below with reference to examples, but the present invention is not limited to these examples.

(Production of europium-activated strontium aluminate (1))

Strontium carbonate (SW-K, Sakai Chemical Industry Co., Ltd., 23.466 g), europium oxide (Shin-Etsu Chemical Co., Ltd., 0.311 g), aluminum oxide (RA-40, Iwatani Chemical Industry Co., Ltd., 17.933 g) were added to water (200 mL) to give slurry. Subsequently, the slurry was dispersed, ground, and mixed in a planetary ball mill using 3-mm-diameter alumina balls (SSA-999W, Nikkato Corporation, 190 g) as grinding media. Thus, a slurry composition for a mechanoluminescent material was obtained. The resulting mixed slurry was dried by evaporation at 130°C. The resulting solid matter was crushed on a mortar into a powdered composition for a mechanoluminescent material. Next, 20 g of the powdered composition for a mechanoluminescent material was charged into an alumina crucible. In a reducing atmosphere (2% hydrogen-containing nitrogen), the temperature was increased to 1200°C at a rate of 200°C/h, maintained for four hours, and then decreased to room temperature at a rate of 200°C/h.

The resulting calcined product was ground in an alcohol solvent using a planetary ball mill, and the size of the particles was adjusted. Then, the particles were filtered and dried. Thus, the target europium-activated strontium aluminate (1) in the form of powder was obtained.

Example 1

Slurry containing a phosphate compound was obtained by mixing diammonium hydrogenphosphate (Wako Pure Chemical Industries, Ltd., 0.45 g) with pure water (30 mL) in a container and stirring.

Particles of the europium-activated strontium aluminate (1) (SAO particles (1), 15 g) were charged into a 100 mL plastic container and blended with the slurry to prepare a mixture. Subsequently, 1. 5-mm-diameter alumina balls (80 g) were added, and slurry was thus obtained.

The slurry was ground for 25 minutes in a planetary ball mill (Fritsch Japan Co., Ltd.) at 150 rpm, and the slurry was passed through a stainless-steel sieve to remove the alumina balls. Thus, ground slurry was obtained. The relative centrifugal acceleration G (m/sec$^2$) here was 3.08.

A value obtained by multiplying the relative centrifugal acceleration G by the grinding time (hr) was 1.28.

The ground slurry was transferred to a porcelain plate, and dried in an electric dryer at 110°C for four hours. The dried powder was crushed on a mortar, and a mechanoluminescent material was obtained in which the surface of the SAO particles (1) was reacted with the phosphate compound and a surface-treated layer was formed thereon.

The resulting mechanoluminescent material was made into a bead sample using a bead sampler (product name: Bead & Fuse Sampler, Tokyo Kagaku). The sample was used to measure the strontium content A in the mechanoluminescent material with ICP emission spectrophotometer (product name: SPS3100, Seiko Instruments Inc.). The strontium content A was 32.6% by weight.

Example 2

The ground slurry after removing the alumina balls in Example 1 was stirred for four hours. Subsequently, the ground slurry was dried using an atomizer spray dryer (direct heating spray dryer), and a mechanoluminescent material was obtained in which the surface of the SAO particles (1) was reacted with the phosphate compound and a surface-treated layer was formed thereon.

The strontium content A in the mechanoluminescent material was 32.1% by weight as measured in the same manner as in Example 1.

Example 3

After the drying in Example 2, a heat treatment was carried out in an electric dryer at 200°C for two hours, and a mechanoluminescent material was obtained in which the surface of SAO particles (1) was reacted with the phosphate compound and a surface-treated layer was formed thereon.

The strontium content A in the mechanoluminescent material was 31.8% by weight as measured in the same manner as in Example 1.

In addition, the phosphorus content in the mechanoluminescent material was 0.72% by weight as measured in the same manner used to measure the strontium content.

In the mechanoluminescent material, the phosphorus content was 0.70 parts by weight relative to 100 parts by weight of the europium-activated strontium aluminate particles.

Example 4

Slurry containing a phosphate compound was obtained by mixing diammonium hydrogenphosphate (Wako Pure Chemical Industries, Ltd., 0.75 g) with pure water (30 mL) in a container and stirring in the same manner as in Example 1.

The slurry was ground, dried, and heat-treated as in Example 3, a mechanoluminescent material was obtained in which the surface of the SAO particles (1) was reacted with the phosphate compound and a surface-treated layer was formed thereon. In the mechanoluminescent material, the phosphorus content was 1.31% by weight and the strontium content A was 32.6% by weight as measured in the same manner as in Example 1.

In the mechanoluminescent material, the phosphorus content was 1.17 parts by weight relative to 100 parts by weight of the europium-activated strontium aluminate particles.

(Production of europium-activated strontium aluminate (2))

Strontium carbonate (SW-K, Sakai Chemical Industry Co., Ltd. 162.71 kg), europium oxide (Shin-Etsu Chemical Co, Ltd. 0.496kg), and aluminum oxide (RA-40, Iwatani Chemical Industry Co, Ltd., 114. 96 kg) were added to pure water and stirred using a stirrer to give slurry. Subsequently, the slurry was dispersed, ground, and mixed in a horizontal sand mill using 3-mm-diameter alumina balls (SSA-999W, Nikkato Corporation, 200 kg) as grinding media. Thus, a slurry composition for a mechanoluminescent material was obtained. The resulting mixed slurry was dried using an atomizer spray dryer (direct heating spray dryer). Thus, a powdered composition for a mechanoluminescent material was obtained. Next, the composition for a mechanoluminescent material was charged into an alumina container for firing. In a reducing atmosphere (2% hydrogen-containing nitrogen), the temperature was increased to 1200°C at a rate of 100°C/h, maintained for four hours, and then decreased to room temperature at a rate of 100°C/h.

The resulting calcined product was crushed using a dry crusher. Thus, the target europium-activated strontium aluminate (2) in the form of powder was obtained.

Example 5

An ammonium phosphate aqueous solution was obtained by mixing diammonium hydrogenphosphate (Wako Pure Chemical Industries, Ltd., 16.6 kg) with pure water and stirring.

Particles of the europium-activated strontium aluminate (2) (SAO particles (2), 276.8 kg) were added to the aqueous solution to give slurry.

The slurry was ground in a horizontal sand mill having a disk diameter of 350 mm at 181 rpm for 14 minutes using 3-mm-diameter alumina balls (SSA-999W, Nikkato Corportation, 200 kg) as grinding media. Thus, slurry was obtained. The relative centrifugal acceleration G (m/sec$^2$) here was 6.40. A value obtained by multiplying the relative centrifugal acceleration G by the grinding time (hr) was 1.49.

The ground slurry was dried using an atomizer spray dryer (direct heating spray dryer), and then charged into an alumina container for calcining. Subsequently, a heat treatment was carried out in an atmospheric kiln at 200°C for 20 hours, and a mechanoluminescent material was obtained in which the surface of the SAO particles (2) was reacted with the phosphate compound and a surface-treated layer was formed thereon.

The strontium content A in the mechanoluminescent material was 32.0% by weight as measured in the same manner as in Example 1. In addition, the phosphorus content in the mechanoluminescent material was 1.46% by weight as measured in the same manner used to measure the strontium content.

Example 6

3-Methacryloxypropyltrimethoxysilane (KBM503, Shin-Etsu Chemical Co., Ltd., 150 g) was stirred to obtain a uniform dispersion in pure water. Thus, a solution of partially hydrolyzed 3-methacryloxypropyltrimethoxysilane was prepared.

The solution and the mechanoluminescent material having a surface-treated layer formed thereon (3.0 kg) obtained in Example 5 were added to pure water to give slurry, and the slurry was stirred at room temperature for one hour.

Subsequently, the slurry was dried using an atomizer spray dryer (direct heating spray dryer). Thus, a powdered mechanoluminescent material was obtained in which a surface-treated layer of the phosphate compound further coated with 3-methacryloxypropyltrimethoxysilane (i.e., a silane coupling agent) was formed thereon.

The strontium content A in the mechanoluminescent material was 30.4% by weight as measured in the same manner as in Example 1. In addition, the phosphorus content in the mechanoluminescent material was 1.34% by weight as measured in the same manner used to measure the strontium content.

Comparative Example 1

Slurry containing a phosphate compound was obtained by mixing diammonium hydrogenphosphate (Wako Pure Chemical Industries, Ltd., 0.45 g) with pure water (30 mL) in a container and stirring.

The europium-activated strontium aluminate particles (1) (SAO particles (1), 15 g) were charged into a 100 mL plastic container and blended with the slurry to prepare a mixture.

The mixture was mixed by stirring, and then dried in an electric dryer at 200°C for 1.5 hours. Thus, a mechanoluminescent material was obtained. The relative centrifugal acceleration G of the stirrer here was below 0.01.

The strontium content A in the mechanoluminescent material was 32.4% by weight as measured in the same manner as in Example 1.

Comparative Example 2

The europium-activated strontium aluminate particles (1) (SAO particles (1)) were used as-is for the subsequent evaluation. The strontium content A in the mechanoluminescent material (SAO particles (1)) was 32.7% by weight as measured in the same manner as in Example 1.

Comparative Example 3

Diammonium hydrogenphosphate (Wako Pure Chemical Industries, Ltd., 0.75 g) and the europium-activated strontium aluminate particles (1) (SAO particles (1), 15 g) were charged into a ball mill (product name: Desktop Pot Mill, Nitto Kagaku Co., Ltd.), and mixed at 25 rpm for 180 minutes, using 15-mm-diameter nylon-coated iron balls (400 g) . The relative centrifugal acceleration G here was 0.06. The mixed powder was heated in an electric dryer at 200°C for 1.5 hours. Thus, a mechanoluminescent material was obtained. The strontium content A in the mechanoluminescent material was 32.5% by weight as measured in the same manner as in Example 1.

(Water resistance test at 40°C)

The mechanoluminescent materials (5 g, each) obtained in Examples 1 to 3 and Comparative Example 1 were immersed in pure water (50 mL) at 40°C to continuously measure the pH of the water containing the mechanoluminescent materials immersed therein.

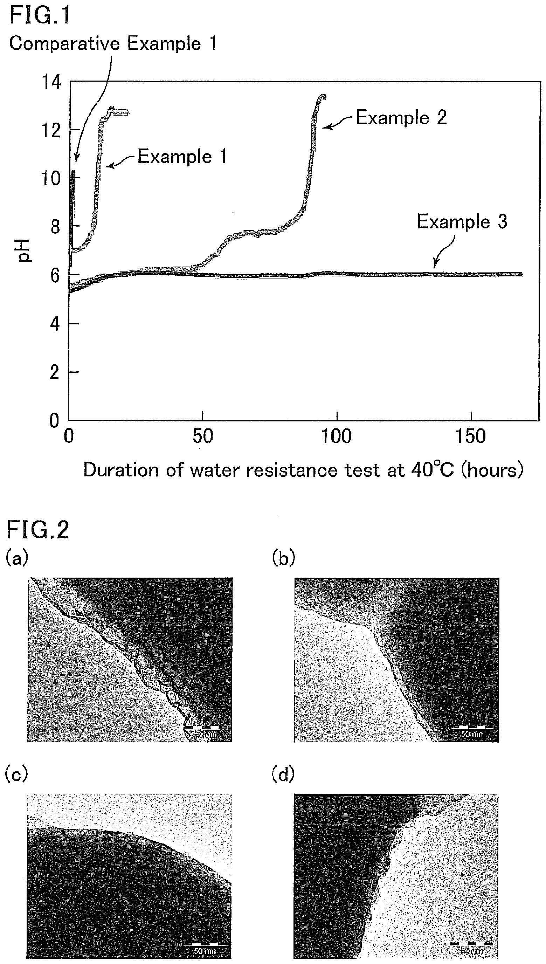

Fig. 1 is a graph showing the results of the water resistance test at 40°C on the mechanoluminescent materials of Examples 1 to 3 and Comparative Example 1.

The pH increases once strontium constituting the mechanoluminescent material becomes a hydrate by a reaction with water and Sr ions that give alkalinity are released at the same time. Thus, an increase in pH indicates deterioration of the mechanoluminescent material by the reaction with water.

It is clear from the results that the mechanoluminescent material of Comparative Example 1 started to deteriorate immediately after the start of the test, but the mechanoluminescent materials of Examples 1 to 3 exhibited improved water resistance.

(Electron micrograph)

Figs. 2(a) to 2(d) are electron micrographs of the mechanoluminescent materials of Examples 1 to 3 and Comparative Example 1. Fig. 2(a), Fig. 2(b), Fig. 2(c), and Fig. 2(d) show the mechanoluminescent materials of Example 1, Example 2, Example 3, and Comparative Example 1, respectively.

These electron micrographs show that the surface-treated layer of the mechanoluminescent material of Example 2 is uniform in thickness, and the surface-treated layer of the mechanoluminescent material of Example 3 is dense. In contrast, the surface-treated layer of the mechanoluminescent material of Comparative Example 1 is non-uniform and uneven in thickness .

(Evaluation of mechanoluminescent performance after water resistance test)

The mechanoluminescent materials (5 g, each) of Examples 3 and 4 and Comparative Example 2 were immersed in pure water (50 mL) at 80°C for 0.5 hours for water resistance test, and the mechanoluminescent performance after the water resistance test was evaluated.

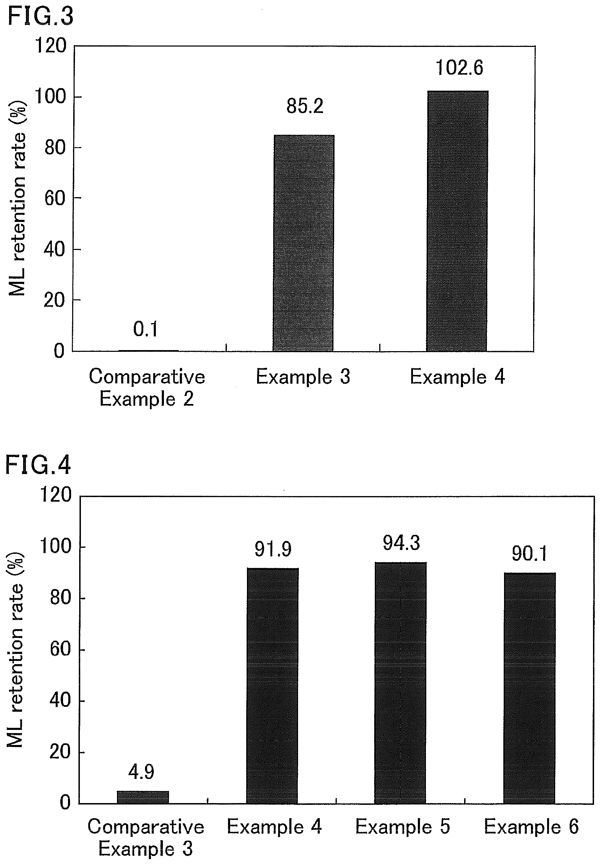

Fig. 3 is a graph showing the results of mechanoluminescent performance evaluation after the water resistance test.

The mechanoluminescent performance was evaluated by the following method.

In order to obtain cylindrical pellets, a transparent plastic cell was charged with the powdered mechanoluminescent material and epoxy resin at a weight ratio of 1:1 and the components were manually mixed, and then the mixture was cured at 40°C. The resulting cylindrical pellets obtained by curing were loaded at 1000 N using a table-top precision universal tester (AGS-X series, Shimadzu Corporation). The light emission at this time was detected using a photomultiplier tube module (H7827-011, Hamamatsu Photonics K.K.).

The samples were evaluated for the mechanoluminescent performance before and after the water resistance test. The mechanoluminescent performance after the water resistance test was evaluated based on a ML retention rate (%), which is a value relative to the mechanoluminescent performance of the sample before the water resistance test taken as 100%.

In the case of the sample of Comparative Example 2, the mechanoluminescent performance after the water resistance test is 0.1%, which indicates that the water resistance test for 0.5 hours nullified the mechanoluminescent performance.

In contrast, in the case of the samples of Examples 3 and 4, the mechanoluminescent performance after the water resistance test is 85.2% in Example 3, and 102.6% in Example 4.

The samples of Examples 3 and 4 both exhibited improved water resistance, and the mechanoluminescent material of Example 4 having a high phosphorus content relative to the SAO particles exhibited higher water resistance.

(Strontium content and mechanoluminescent performance evaluation after humidity resistance test)

The mechanoluminescent materials obtained in Examples 1 to 6 and Comparative Examples 1 to 3 were placed in petri dishes, and stored in a thermo-hygrostat at a temperature of 85°C and an RH of 85% for 168 hours for humidity resistance test. The strontium content B in each mechanoluminescent material after the humidity resistance test was measured in the same manner used to measure the strontium content A before the humidity resistance test in Example 1. The rate of change was calculated from a formula $(A-B)/A \times 100$, using the strontium content A in the mechanoluminescent material before the humidity resistance test and the strontium content B in the mechanoluminescent material after the humidity resistance test.

The following shows the content B and the rate of change.

Example 1: content B after the humidity resistance test: 32.1% by weight; rate of change: 1.5%
Example 2: content B after the humidity resistance test: 32.0% by weight; rate of change: 0.3%
Example 3: content B after the humidity resistance test: 31.8% by weight; rate of change: 0.0%
Example 4: content B after the humidity resistance test: 32.2% by weight; rate of change: 1.2%
Example 5: content B after the humidity resistance test: 31.7% by weight; rate of change: 0.9%
Example 6: content B after the humidity resistance test: 30.4% by weight; rate of change: 0.0%

Comparative Example 1: content B after the humidity resistance test: 28.0% by weight; rate of change: 13.6%
Comparative Example 2: content B after the humidity resistance test: 25.8% by weight; rate of change: 21.1%
Comparative Example 3: content B after the humidity resistance test: 25.8% by weight; rate of change: 20.6%

Fig. 4 is a graph showing the results of mechanoluminescent performance evaluation after the humidity resistance test.

The samples of the mechanoluminescent materials obtained in Examples 4, 5, and 6 and Comparative Example 3 were evaluated for the mechanoluminescent performance before and after the humidity resistance test. The mechanoluminescent performance after the humidity resistance test was evaluated based on the ML retention rate (%), which is a value relative to the mechanoluminescent performance of the sample before the humidity resistance test taken as 100%.

In the case of the sample of Comparative Example 3, the mechanoluminescent performance after the humidity resistance test is 4.9%, which indicates that the mechanoluminescent performance was nullified.

In contrast, in the case of the samples of Examples 4, 5, and 6, the mechanoluminescent performance after the humidity resistance test was 91.9%, 94.3%, and 90.1%, respectively.

(Observation of surface-treated layer)

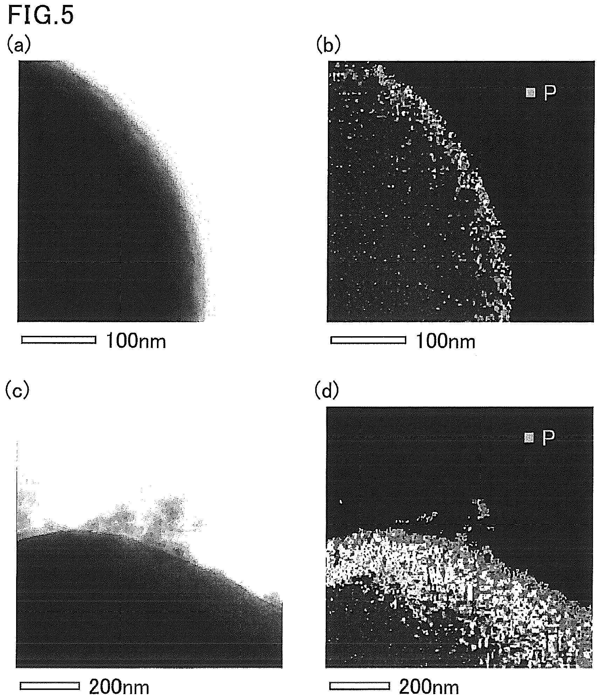

Fig. 5(a) is an electron micrograph of the mechanoluminescent material of Example 3; and Fig. 5(b) is an EDX mapping image of Fig. 5(a). Fig. 5(c) is an electron micrograph of the mechanoluminescent material of Comparative Example 1; and Fig. 5(d) is an EDX mapping image of Fig. 5(c).

The mapping image of Fig. 5(b) and the mapping image of Fig. 5(d) each show the distribution of phosphorus (P) and aluminium (Al). The distribution of phosphorus shows the distribution of sites where the surface-treated layer is formed by the reaction with the phosphate compound.

Comparison between the mapping image of Fig. 5 (b) and the mapping image of Fig. 5(d) shows that the distribution of phosphorus in the mechanoluminescent material of Example 3 is concentrated at the surface of the mechanoluminescent material, and phosphorus is densely distributed to a uniform thickness on the surface of the mechanoluminescent material. In contrast, although the mechanoluminescent material of the mechanoluminescent material of Comparative Example 1 appears to be thickly coated with phosphorus due to the difference in magnification, the phosphorus content is the same as that in the mechanoluminescent material of Example 3, so that the distribution of phosphorus in the coated layer is actually sparse.

Based on the above, it is clear that the surface-treated layer of the mechanoluminescent material of Example 3 is more uniform and denser than that of the mechanoluminescent material of Comparative Example 1.

## Claims

1. A mechanoluminescent material obtained by mixing a phosphate compound and europium-activated strontium aluminate particles into slurry, grinding the slurry into ground slurry, and drying the ground slurry,
   wherein the rate of change calculated from a formula $(A-B)/A \times 100$ is 10% or less, where A is the strontium content in the obtained mechanoluminescent material, and B is the strontium content in the mechanoluminescent material after 168 hours of storage in an atmosphere at a temperature of 85°C and a relative humidity of 85%,
   wherein an amount of a europium ion contained in the mechanoluminescent material is in the range of 0.0005 to 0.005 mol per mole of the strontium aluminate.

2. The mechanoluminescent material according to claim 1,
   wherein the mechanoluminescent material is obtained by the grinding in a reaction vessel provided with a grinding-media-stirring grinder under a condition that $0.1 \leq G \leq 20$ where G is a relative centrifugal acceleration in $m/sec^2$ that is imparted to the grinding media.

3. The mechanoluminescent material according to claim 2,
   wherein the mechanoluminescent material is obtained by the grinding under a condition that $0.1 \leq G \leq 10$ where G is a relative centrifugal acceleration in $m/sec^2$ that is imparted to the grinding media.

4. The mechanoluminescent material according to any one of claims 1 to 3,
   wherein the mechanoluminescent material is obtained by the grinding for 5 minutes to less than 180 minutes.

5. The mechanoluminescent material according to any one of claims 1 to 4,
   wherein the mechanoluminescent material is obtained by the grinding in a reaction vessel provided with a grinding-media-stirring grinder under a condition that a value obtained by multiplying the relative centrifugal acceleration G $(m/sec^2)$ that is imparted to the grinding media by the grinding time (hr) is in the range of 0.01 to less than 10.

6. The mechanoluminescent material according to any one of claims 1 to 5,
   wherein the mechanoluminescent material is obtained through a heat treatment in an atmosphere at 120°C to 300°C after the drying.

7. The mechanoluminescent material according to any one of claims 1 to 6,
   wherein the mechanoluminescent material contains 0.2 to 5.0 parts by weight of phosphorus, as elemental phosphorus, derived from the phosphate compound relative to 100 parts by weight of the europium-activated strontium aluminate particles.

8. The mechanoluminescent material according to any one of claims 1 to 7,
   wherein the phosphate is at least one selected from the group consisting of ammonium phosphate, sodium phosphate, potassium phosphate, sodium polyphosphate, sodium hexametaphosphate, and phosphoric acid.

9. A method for producing a mechanoluminescent material, comprising the steps of:

   mixing a phosphate compound and europium-activated strontium aluminate particles into slurry;
   grinding the slurry into ground slurry; and
   drying the ground slurry.

10. A mechanoluminescent coating composition comprising the mechanoluminescent material according to any one of claims 1 to 8.

11. A resin composition comprising the mechanoluminescent material according to any one of claims 1 to 8.

12. A mechanoluminescent article formed from the resin composition according to claim 11.

**Patentansprüche**

1. Mechanolumineszierendes Material, das durch Mischen einer Phosphatverbindung und von durch Europium aktivierten Strontiumaluminatteilchen zu einer Aufschlämmung, Mahlen der Aufschlämmung zu gemahlener Aufschlämmung und Trocknen der gemahlenen Aufschlämmung erhalten wird,
wobei die Änderungsrate, die aus einer Formel (A-B)/A x 100 errechnet wird, 10 % oder weniger beträgt, wobei A der Strontiumgehalt in dem erhaltenen mechanolumineszierenden Material ist und B der Strontiumgehalt in dem mechanolumineszierenden Material nach 168 Stunden Lagerung in einer Atmosphäre bei einer Temperatur von 85 °C und einer relative Feuchte von 85 % ist,
wobei eine Menge eines Europiumions, die in dem mechanolumineszierenden Material enthalten ist, im Bereich von 0,0005 bis 0,005 Mol pro Mol des Strontiumaluminats beträgt.

2. Mechanolumineszierendes Material nach Anspruch 1,
wobei das mechanolumineszierende Material durch Mahlen in einem Reaktionsgefäß, das mit einer Mahlmedium-Rührmahlvorrichtung ausgestattet ist, unter einer Bedingung erhalten wird, die $0,1 \leq G \leq 20$ ist, wobei G eine relative zentrifugale Beschleunigung in m/sec$^2$ ist, die auf das Mahlmedium aufgebracht wird.

3. Mechanolumineszierendes Material nach Anspruch 2,
wobei das mechanolumineszierende Material durch Mahlen unter einer Bedingung erhalten wird, die $0,1 \leq G \leq 10$ ist, wobei G eine relative zentrifugale Beschleunigung in m/sec$^2$ ist, die auf das Mahlmedium aufgebracht wird.

4. Mechanolumineszierendes Material nach einem der Ansprüche 1 bis 3,
wobei das mechanolumineszierende Material durch 5 Minuten bis weniger als 180 Minuten langes Mahlen erhalten wird.

5. Mechanolumineszierendes Material nach einem der Ansprüche 1 bis 4,
wobei das mechanolumineszierende Material durch Mahlen in einem Reaktionsgefäß, das mit einer Mahlmedium-Rührmahlvorrichtung ausgestattet ist, unter einer Bedingung erhalten wird, dass ein Wert, der durch Multiplizieren der relativen zentrifugalen Beschleunigung G (m/sec$^2$), die auf das Mahlmedium aufgebracht wird, mit der Mahlzeit (h) erhalten wird, im Bereich von 0,01 bis weniger als 10 liegt.

6. Mechanolumineszierendes Material nach einem der Ansprüche 1 bis 5,
wobei das mechanolumineszierende Material durch eine Hitzebehandlung in einer Atmosphäre bei 120 °C bis 300 °C nach dem Trocknen erhalten wird.

7. Mechanolumineszierendes Material nach einem der Ansprüche 1 bis 6,
wobei das mechanolumineszierende Material 0,2 bis 5,0 Gewichtsteile Phosphor, als elementaren Phosphor, der von der Phosphatverbindung abgeleitet ist, mit Bezug auf 100 Gewichtsteile von durch Europium aktivierten Strontiumaluminatteilchen enthält.

8. Mechanolumineszierendes Material nach einem der Ansprüche 1 bis 7,
wobei das Phosphat mindestens eines ist ausgewählt aus der Gruppe bestehend aus Ammoniumphosphat, Natriumphosphat, Kaliumphosphat, Natriumpolyphosphat, Natriumhexametaphosphat und Phosphorsäure.

9. Verfahren für die Herstellung eines mechanolumineszierenden Materials, umfassend die Schritte des:

Mischens einer Phosphatverbindung und von durch Europium aktivierten Strontiumaluminatteilchen zu einer Aufschlämmung,
Mahlens der Aufschlämmung zu gemahlener Aufschlämmung und
Trocknens der gemahlenen Aufschlämmung.

10. Mechanolumineszierende Beschichtungszusammensetzung umfassend das mechanolumineszierende Material nach einem der Ansprüche 1 bis 8.

11. Harzzusammensetzung umfassend das mechanolumineszierende Material nach einem der Ansprüche 1 bis 8.

12. Mechanolumineszierender Artikel, der aus der Harzzusammensetzung nach Anspruch 11 gebildet wird.

**Revendications**

1. Matériau mécanoluminescent obtenu par mélange d'un composé de phosphate et de particules d'aluminate de strontium activé par de l'europium en une suspension, broyage de la suspension en une suspension broyée, et séchage de la suspension broyée,
dans lequel le taux de modification calculé à partir d'une formule (A-B)/A x 100 est de 10 % ou inférieur, où A est la teneur en strontium dans le matériau mécanoluminescent obtenu, et B est la teneur en strontium dans le matériau mécanoluminescent après 168 heures de stockage dans une atmosphère à une température de 85°C et une humidité relative de 85 %,
dans lequel une quantité d'un ion europium contenue dans le matériau mécanoluminescent se trouve dans l'intervalle de 0,0005 à 0,005 mole par mole de l'aluminate de strontium.

2. Matériau mécanoluminescent selon la revendication 1,
dans lequel le matériau mécanoluminescent est obtenu par le broyage dans une cuve de réaction munie d'un broyeur d'agitation de milieu de broyage dans une condition telle que $0,1 \leq G \leq 20$ où G est une accélération centrifuge relative en m/sec$^2$ qui est communiquée au milieu de broyage.

3. Matériau mécanoluminescent selon la revendication 2,
dans lequel le matériau mécanoluminescent est obtenu par le broyage dans une condition telle que $0,1 \leq G \leq 10$ où G est une accélération centrifuge relative en m/sec$^2$ qui est communiquée au milieu de broyage.

4. Matériau mécanoluminescent selon l'une quelconque des revendications 1 à 3,
dans lequel le matériau mécanoluminescent est obtenu par le broyage pendant 5 minutes à moins de 180 minutes.

5. Matériau mécanoluminescent selon l'une quelconque des revendications 1 à 4,
dans lequel le matériau mécanoluminescent est obtenu par le broyage dans une cuve de réaction munie d'un broyeur d'agitation de milieu de broyage dans une condition telle qu'une valeur obtenue par multiplication de l'accélération centrifuge relative G (m/sec$^2$) qui est communiquée au milieu de broyage par la durée de broyage (hr) se trouve dans l'intervalle de 0,01 à moins de 10.

6. Matériau mécanoluminescent selon l'une quelconque des revendication 1 à 5,
dans lequel le matériau mécanoluminescent est obtenu par un traitement thermique dans une atmosphère à de 120°C à 300°C après le séchage.

7. Matériau mécanoluminescent selon l'une quelconque des revendications 1 à 6,
dans lequel le matériau mécanoluminescent contient de 0,2 à 5,0 parties en masse de phosphore, comme phosphore élémentaire, dérivé du composé de phosphore par rapport à 100 parties en masse des particules d'aluminate de strontium activé par de l'europium.

8. Matériau mécanoluminescent selon l'une quelconque des revendications 1 à 7,
dans lequel le phosphate est au moins un choisi dans le groupe consistant en phosphate d'ammonium, phosphate de sodium, phosphate de potassium, polyphosphate de sodium, hexamétaphosphate de sodium, et acide phosphorique.

9. Procédé de production d'un matériau mécanoluminescent comprenant les étapes de :

mélange d'un composé de phosphate et de particules d'aluminate de strontium activé par de l'europium en une suspension ;
broyage de la suspension en une suspension broyée ; et
séchage de la suspension broyée.

10. Composition de revêtement mécanoluminescente comprenant le matériau mécanoluminescent selon l'une quelconque des revendications 1 à 8.

11. Composition de résine comprenant le matériau mécanoluminescent selon l'une quelconque des revendications 1 à 8.

12. Article mécanoluminescent formé à partir de la composition de résine selon la revendication 11.

## FIG.1

Comparative Example 1

Duration of water resistance test at 40°C (hours)

## FIG.2

(a)

(b)

(c)

(d)

FIG.3

FIG.4

## FIG.5

(a)

100nm

(b)

P

100nm

(c)

200nm

(d)

P

200nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3511083 B
- JP 5007971 B
- JP 3789193 E
- US 2005266269 A1